# EUROPEAN PATENT SPECIFICATION

(11) **EP 4 027 722 B1**
(45) Date of publication and mention of the grant of the patent: **25.06.2025**
(21) Application number: 19947864.5
(22) Date of filing: 30.09.2019
(51) Int. Cl.: H04W 72/04, H04L 5/00, H04W 72/23, H04W 72/12, H04W 88/02, H04W 92/18, H04L 1/1822, H04L 1/1867

(54) **SIDELINK CONFIGURATION METHOD AND APPARATUS, DEVICE, AND STORAGE MEDIUM**
VERFAHREN UND GERÄT ZUR SIDELINK-KONFIGURATION, VORRICHTUNG UND SPEICHERMEDIUM
PROCÉDÉ ET APPAREIL DE CONFIGURATION DE LIAISON LATÉRALE, DISPOSITIF ET SUPPORT DE STOCKAGE

(43) Date of publication of application: 13.07.2022
(73) Proprietor: Huawei Technologies Co., Ltd., Shenzhen, Guangdong 518129 (CN)
(72) Inventor: YU, Chang, Shenzhen, Guangdong 518129 (CN); CHANG, Junren, Shenzhen, Guangdong 518129 (CN); WEI, Dongdong, Shenzhen, Guangdong 518129 (CN); WANG, Jun, Shenzhen, Guangdong 518129 (CN); ZHANG, Xiangdong, Shenzhen, Guangdong 518129 (CN); WANG, Junwei, Shenzhen, Guangdong 518129 (CN)
(74) Representative: Pfenning, Meinig & Partner mbB
(86) International application number: PCT/CN2019/109762
(87) International publication number: WO 2021/062833

(56) References cited:
- WO-A1-2018/151534
- CN-A- 101 197 644
- CN-A- 110 115 061
- US-A1- 2018 159 668
- US-A1- 2019 044 667
- US-A1- 2019 373 578
- HUAWEI ET AL: "Discussion on Sidelink Configured Grant support", vol. RAN WG2, no. Prague, Czech Republic; 20190826 - 20190830, 16 August 2019 (2019-08-16), XP051768834, Retrieved from the Internet <URL:http://www.3gpp.org/ftp/tsg_ran/WG2_RL2/TSGR2_107/Docs/R2-1911072.zip> [retrieved on 20190816]
- VIVO: "Discussion on mode 1 resource allocation mechanism", vol. RAN WG1, no. Prague, CZ; 20190826 - 20190830, 17 August 2019 (2019-08-17), XP051764768, Retrieved from the Internet <URL:http://www.3gpp.org/ftp/tsg_ran/WG1_RL1/TSGR1_98/Docs/R1-1908149.zip> [retrieved on 20190817]
- HUAWEI ET AL: "HARQ related identifier assignment for Option2 groupcast mechanism", vol. RAN WG2, no. Prague, Czech Republic; 20190826 - 20190830, 16 August 2019 (2019-08-16), XP051768830, Retrieved from the Internet <URL:http://www.3gpp.org/ftp/tsg_ran/WG2_RL2/TSGR2_107/Docs/R2-1911068.zip> [retrieved on 20190816]
- CATT: "Discussion on physical layer procedures in NR V2X", 3GPP DRAFT; R1-1812618, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 18 November 2018 (2018-11-18), Mobile Competence Centre ; 650, route des Lucioles ; F-06921 Sophia-Antipolis Cedex ; France, pages 1 - 8, XP051478859
- SAMSUNG: "On Physical Layer Procedures for NR V2X", 3GPP DRAFT; R1-1904426, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi’an, China; 20190408 - 20190412, 3 April 2019 (2019-04-03), Mobile Competence Centre ; 650, route des Lucioles ; F-06921 Sophia-Antipolis Cedex ; France, pages 1 - 14, XP051707209

## Description

### TECHNICAL FIELD

This application relates to the communication technologies, and in particular, to a sidelink configuration method and apparatus, a device, and a storage medium.

### BACKGROUND

With great progress of science and technology and improvement of living standards, people no longer simply define automobiles as means of transportation, and have increasing demands for safety, environmental protection, comfort and entertainment of the automobiles. A rapid increase of the demands in these aspects results in problems such as shortage of spectrum resources, frequency band congestion, and security of in-vehicle communication. With rapid development of a new radio (New Radio, NR) communication system, performance of the new radio communication system, for example, low latency, high reliability, and high spectrum utilization, can effectively resolve the current problems in vehicle-to-everything. Therefore, implementation and deployment of 5G vehicle-to-everything are imperative. Vehicle-to-everything (vehicle-to-everything, V2X) is considered to be one of the fields with the biggest industry potential and the clearest market requirements in the internet of things system.

In V2X communication, communication between user equipments (User Equipment, UE) may be in a sidelink (Sidelink, SL) manner. In a communication manner based on a sidelink technology, resource allocation on sidelink includes two modes. Mode 1: A base station schedules resource allocation (hereinafter referred to as a scheduling mode, namely, the mode 1). When UE in a connected mode that performs V2X communication needs to transmit data on sidelink, the UE first needs to send a buffer status report (Buffer Status Report, BSR) to the base station, to report an amount of sidelink data that the UE needs to transmit currently. In this way, the base station allocates a sidelink resource of an appropriate size based on the data amount. Mode 2: UE autonomously selects a resource (hereinafter referred to as an autonomous mode, namely, the mode 2). When the UE that performs sidelink communication needs to transmit data on sidelink, the UE may select a resource from a resource pool configured or preconfigured by a base station, to perform data transmission on the sidelink. When in sidelink data transmission between the UEs, the base station configures an SL configured grant (Configured Grant, CG) for transmit end (Transmit, TX) UE. The TX UE calculates, based on a configured time-frequency resource position of the SL CG, a hybrid automatic repeat request (Hybrid Automatic Repeat reQuest, HARQ) process identifier (process identifier, PID) corresponding to each CG transmission, and then adds the PID to SCI to indicate to receive end (Receive, RX) UE.

However, in the foregoing solution, before each SL transmission, the TX UE needs to send the SCI to the RX UE, which occupies a large quantity of SL resources, and causes a resource waste.

Huawei et al: "Discussion on Sidelink Configured Grant support", 3GPP Draft R2-1911072, 16 August 2019 discusses how to support sidelink configured grant, from RAN2 perspective. In particular, since PC5-RRC interface is supported at least for unicast, it is proporsed to use PC5-RRC to transmit these parameters to the receive UE, at least for SL unicast.

### SUMMARY

This application provides a sidelink configuration method and apparatus, a device, and a storage medium, to align parameters and configurations in a sidelink transmission process using a small quantity of SL resources, to avoid The invention is set out in the appended claims. a resource waste.

According to a first aspect, this application provides a sidelink configuration method, applied to a first terminal device. The method includes:
obtaining first information, where the first information is configuration information of an SL CG or activation/deactivation information of an SL CG;
sending the first information to a second terminal device by using sidelink RRC; and
sending sidelink service data to the second terminal device based on the first information.

The method further includes:
sending first indication information to the second terminal device, wherein the first indication information is used to indicate that the first terminal device has service data to be sent; and
receiving first feedback information fed back by the second terminal device, wherein the first feedback information is used to indicate that the second terminal device has an idle HARQ process or has no idle HARQ process

Compared with the conventional technology where before each sidelink transmission is performed, a terminal device at a transmit end needs to send SCI to a terminal device at a receive end, in this solution, transmission on information needed for sidelink transmissions is performed by using the sidelink RRC, so that SCI sending does not need to be performed for a plurality of times to transfer information, which effectively saves transmission resources on sidelink.

In a specific implementation of this solution, the first information includes at least one of the following: second indication information for determining a HARQ process identifier, and a DMRS configuration.

Because transmission on information needed for sidelink transmissions is performed by using the sidelink RRC, the terminal device at the receive end obtains a time-frequency resource configuration of sidelink transmissions, and further obtains a HARQ process identifier and/or a DMRS configuration of each transmission. In this way, SCI sending does not need to be performed for a plurality of times subsequently, which further saves transmission resources on the sidelink.

In this solution, the terminal device at the transmit end can learn, through information exchange between the terminal devices at both ends of sidelink data transmission, whether the terminal device at the receive end has an idle process, and perform sidelink data transmission when the terminal device at the receive end has an idle process.

In a specific implementation of this solution, before the obtaining first information, the method further includes:
receiving a transmission configuration that is of the SL CG and that is sent by a network device, where the transmission configuration of the SL CG includes a time-frequency resource configuration of the SL CG.

In this solution, the first terminal device needs to perform sidelink data transmission, and the network device needs to perform transmission configuration on the SL CG, where the transmission configuration includes at least the time-frequency resource configuration.

On the basis of any one of the foregoing solutions, in a specific implementation, the second indication information may not be transmitted by using a same RRC message as the DMRS or the transmission resource information, and the second indication information may be sent to the second terminal device by using other sidelink RRC. The second indication information determines the HARQ process identifier.

In another specific implementation, the transmission configuration of the SL CG further includes a first parameter for calculating the HARQ process identifier, and the method further includes:
obtaining the HARQ process identifier through calculation based on the first parameter and the time-frequency resource configuration of the SL CG, where the second indication information includes the HARQ process identifier.

In still another specific implementation, the transmission configuration of the SL CG further includes a first parameter for calculating the HARQ process identifier, and the second indication information includes the first parameter and the time-frequency resource configuration of the SL CG.

In still another specific implementation, the method further includes:
determining a first parameter of the HARQ process identifier for transmitting sidelink data, where the second indication information includes the first parameter and the time-frequency resource configuration of the SL CG.

Several specific implementations of the second indication information are disclosed above. Regardless of a quantity of HARQ processes needed for transmitting the sidelink data, for example, one or more HARQ processes, the first terminal device can determine HARQ process identifiers through calculation based on parameters configured by a network or determined by the first terminal device, and then indicate the HARQ process identifiers to the second terminal device. Alternatively, the first terminal device may directly indicate parameters configured by a network or determined by the first terminal device to the second terminal device for calculation. This is not limited.

In another implementation, the method further includes determining the DMRS configuration for transmitting the sidelink data.

According to a second aspect, this application provides a sidelink configuration method, applied to a second terminal device. The method includes:
receiving, by using sidelink RRC, first information sent by a first terminal device, where the first information is configuration information of an SL CG or activation/deactivation information of an SL CG; and
receiving, based on the first information, sidelink service data sent by the first terminal device.

The method further includes:
receiving first indication information sent by the first terminal device, where the first indication information is used to indicate that the first terminal device has service data to be sent; and
sending first feedback information to the first terminal device, where the first feedback information is used to indicate that the second terminal device has an idle HARQ process or has no idle HARQ process.

In a specific implementation, the first information includes at least one of the following: second indication information for determining a hybrid automatic repeat request HARQ process identifier, and a demodulation reference signal DMRS configuration.

Optionally, the method further includes:
receiving, by using the sidelink RRC, second indication information sent by the first terminal device, where the second indication information is for determining a HARQ process identifier.

According to a third aspect, which is not according to the invention but relates to an example useful for understanding the invention, this application provides a sidelink configuration method, applied to a first terminal device. The method includes:
sending indication information to a second terminal device, where the indication information is for determining a HARQ process identifier; and
sending sidelink service data to the second terminal device based on the HARQ process identifier.

Different from the foregoing solutions, this solution discloses a solution for aligning parameters between a terminal device at a transmit end and a terminal device at a receive end in a sidelink transmission process.

Optionally, in a specific implementation of this solution, the indication information may be sent by using sidelink RRC, or may be sent by using a PSCCH (namely, SCI) or a PSSCH (namely, SL data).

In a specific implementation of the solution, the method further includes:
receiving a transmission configuration that is of a sidelink configured grant SL CG and that is sent by a network device, where the transmission configuration of the SL CG includes a time-frequency resource configuration of the SL CG.

Correspondingly, the sending sidelink service data to the second terminal device based on the HARQ process identifier includes:
sending the sidelink service data to the second terminal device based on the time-frequency resource configuration of the SL CG and the HARQ process identifier.

On the basis of any one of the foregoing solutions, in a specific implementation of the solution, the method further includes:
when switching from a scheduling mode to a combination mode of the scheduling mode and an autonomous mode, the first terminal device selects, for sidelink transmission that needs to use an autonomous mode resource, the HARQ process identifier from a range of process identifiers preconfigured or configured by the network device, where the indication information includes the HARQ process identifier.

In another specific implementation of the solution, the method further includes:
sending a first request to the network device, where the first request is used to request the network device to allocate a HARQ process identifier; and
receiving a new range of process identifiers reconfigured by the network device or a process identifier configured by the network device, where the indication information includes a process identifier determined based on the range of process identifiers or the configured process identifier.

In still another specific implementation of the solution, the method further includes:
the first terminal device switches from the autonomous mode to the combination mode of the scheduling mode and the autonomous mode, and sends report information to the network device, where the report information is used to report an identifier of a process occupied by the autonomous mode; and
receives a process identifier configured by the network device for the scheduling mode and/or a range of process identifiers configured for the autonomous mode.

In this solution, there may be one or more process identifiers configured by the network device for the scheduling mode. It should be further understood that an occupied process is a process that the terminal device is using, that is waiting for feedback, whose buffer is not empty, that is waiting for retransmission scheduling, that is waiting for retransmission resources, or that is not yet released.

An idle process is a process that the terminal device is not using, whose buffer is empty, that has been released, that is not occupied, or that is available (available).

In still yet another specific implementation, the first terminal device is in the combination mode of the scheduling mode and the autonomous mode, and the method further includes:
for sidelink transmission that needs to use a scheduling mode resource, using a HARQ process identifier preconfigured or configured by the network device; and
for sidelink transmission that needs to use an autonomous mode resource, sending a second request to the network device, and receiving a HARQ process identifier configured by the network device, where the second request is used to request the network device to allocate a HARQ process identifier.

Optionally, the HARQ process identifier is used for a current sidelink transmission or a subsequent sidelink transmission using the autonomous mode resource.

In another specific implementation, the first terminal device is in the combination mode of the scheduling mode and the autonomous mode, and the transmission configuration of the SL CG includes a quantity of HARQ processes and a first parameter or a range of a first parameter for determining a HARQ process identifier; and the method further includes:
determining the HARQ process identifier based on the time-frequency resource configuration of the SL CG, the quantity of HARQ processes, and the first parameter or the range of the first parameter, where the indication information includes the HARQ process identifier.

In a further specific implementation, the first terminal device is in the combination mode of the scheduling mode and the autonomous mode, and the method further includes:
determining a first parameter based on a current idle HARQ process; and
determining a HARQ process identifier based on the first parameter and the time-frequency resource configuration of the SL CG, where the indication information includes the HARQ process identifier.

The foregoing several solutions provide HARQ process configuration solutions in a scenario in which different modes coexist or switching between different modes is performed, to effectively avoid a HARQ process conflict when the different modes coexist or switching between the different modes is performed.

According to a fourth aspect, this application provides a sidelink configuration method, applied to a second terminal device. The method includes:
receiving indication information sent by a first terminal device, where the indication information is for determining a HARQ process identifier;
determining the HARQ process identifier based on the indication information; and
receiving, based on the HARQ process identifier, sidelink service data sent by the first terminal device.

In this solution, the indication information may be transmitted by using sidelink RRC, or may be transmitted by using a PSCCH (namely, SCI) or a PSSCH (namely, SL data).

According to a fifth aspect, this application provides a sidelink configuration method, applied to a first terminal device. The method includes:
sending indication information to a second terminal device, where the indication information is used to indicate that the first terminal device has service data to be sent;
receiving feedback information fed back by the second terminal device, where the feedback information is used to indicate that the second terminal device has an idle HARQ process or has no idle HARQ process; and
if the feedback information indicates that the second terminal device has an idle HARQ process, sending sidelink service data to the second terminal device.

According to a sixth aspect, this application provides a sidelink configuration method, applied to a second terminal device. The method includes:
receiving indication information sent by a first terminal device, where the indication information is used to indicate that the first terminal device has service data to be sent;
determining that there is an idle HARQ process or that there is no idle HARQ process, and sending feedback information to the first terminal device, where the feedback information is used to indicate that there is an idle HARQ process or that there is no idle HARQ process; and
if the feedback information indicates that there is an idle HARQ process, receiving sidelink service data sent by the first terminal device.

According to a seventh aspect, this application provides a sidelink configuration apparatus, including:
an obtaining module, configured to obtain first information, where the first information is configuration information of a sidelink configured grant SL CG or activation/deactivation information of an SL CG; and
a sending module, configured to send the first information to a second terminal device by using sidelink radio resource control RRC, where
the sending module is further configured to send sidelink service data to the second terminal device based on the first information.

Optionally, the first information includes at least one of the following: second indication information for determining a hybrid automatic repeat request HARQ process identifier, and a demodulation reference signal DMRS configuration.

Optionally, the apparatus further includes a first receiving module.

The sending module is further configured to send first indication information to the second terminal device, where the first indication information is used to indicate that the sidelink configuration apparatus has service data to be sent.

The first receiving module is configured to receive first feedback information fed back by the second terminal device, where the first feedback information is used to indicate that the second terminal device has an idle HARQ process or has no idle HARQ process.

Optionally, the apparatus further includes:
a second receiving module, configured to receive a transmission configuration that is of an SL CG and that is sent by a network device, where the transmission configuration of the SL CG es a time-frequency resource configuration of the SL CG.

Optionally, the sending module is further configured to send second indication information to the second terminal device by using the sidelink RRC, where the second indication information determines a HARQ process identifier.

Optionally, the transmission configuration of the SL CG further includes a first parameter for calculating the HARQ process identifier, and the apparatus further includes:
a processing module, configured to obtain the HARQ process identifier through calculation based on the first parameter and the time-frequency resource configuration of the SL CG, where the second indication information includes the HARQ process identifier.

Optionally, the transmission configuration of the SL CG further includes a first parameter for calculating the HARQ process identifier, and the second indication information includes the first parameter and the time-frequency resource configuration of the SL CG.

Optionally, the apparatus further includes:
a processing module, configured to determine a first parameter of the HARQ process identifier for transmitting sidelink data, where the second indication information includes the first parameter and the time-frequency resource configuration of the SL CG.

Optionally, the apparatus further includes:
a processing module, configured to determine the DMRS configuration for transmitting sidelink data.

According to an eighth aspect, this application provides a sidelink configuration, including:
a receiving module, configured to receive, by using sidelink radio resource control RRC, first information sent by a first terminal device, where the first information is configuration information of a sidelink configured grant SL CG or activation/deactivation information of an SL CG, where
the receiving module is further configured to receive, based on the first information, sidelink service data sent by the first terminal device.

Optionally, the first information includes at least one of the following: second indication information for determining a hybrid automatic repeat request HARQ process identifier, and a demodulation reference signal DMRS configuration.

Optionally, the apparatus further includes a sending module.
the receiving module is further configured to receive first indication information sent by the first terminal device, where the first indication information is used to indicate that the first terminal device has service data to be sent; and
the sending module is configured to send first feedback information to the first terminal device, where the first feedback information is used to indicate that the second terminal device has an idle HARQ process or has no idle HARQ process.

Optionally, the apparatus further includes:
the receiving module is further configured to receive, by using the sidelink RRC, second indication information sent by the first terminal device, where the second indication information is for determining a HARQ process identifier.

According to a ninth aspect, this application provides a sidelink configuration apparatus, including:
a sending module, configured to send indication information to a second terminal device, where the indication information is for determining a HARQ process identifier.

The sending module is further configured to send sidelink service data to the second terminal device based on the HARQ process identifier.

Optionally, in a specific implementation of this solution, the indication information may be sent by using sidelink RRC, or may be sent by using a PSCCH (namely, SCI) or a PSSCH (namely, SL data).

Optionally, the apparatus further includes:
a receiving module, configured to receive a transmission configuration that is of a sidelink configured grant SL CG and that is sent by a network device, where the transmission configuration of the SL CG includes a time-frequency resource configuration of the SL CG.

Correspondingly, the sending module is specifically configured to send the sidelink service data to the second terminal device based on the time-frequency resource configuration of the SL CG and the HARQ process identifier.

Optionally, the apparatus further includes:
a processing module, configured to: when the sidelink configuration apparatus switches from a scheduling mode to a combination mode of the scheduling mode and an autonomous mode, the first terminal device selects, for sidelink transmission that needs to use an autonomous mode resource, the HARQ process identifier from a range of process identifiers preconfigured or configured by the network device, where the indication information includes the HARQ process identifier.

Optionally, the sending module is further configured to send a first request to the network device, where the first request is used to request the network device to allocate a HARQ process identifier.

The receiving module is further configured to receive a new range of process identifiers reconfigured by the network device or a process identifier configured by the network device, where the indication information includes a process identifier determined based on the range of process identifiers or the configured process identifier.

Optionally, the sending module is further configured to: when the sidelink configuration apparatus switches from the autonomous mode to the combination mode of the scheduling mode and the autonomous mode, send report information to the network device, where the report information is used to report an identifier of a process occupied by the autonomous mode.

The receiving module is configured to receive a process identifier configured by the network device for the scheduling mode and/or a range of process identifiers configured for the autonomous mode.

Optionally, the first terminal device is in the combination mode of the scheduling mode and the autonomous mode. The processing module is further configured to use, for sidelink transmission that needs to use a scheduling mode resource, a HARQ process identifier preconfigured by the network device or configured by the network device.

The sending module is further configured to send a second request to the network device for sidelink transmission that needs to use an autonomous mode resource.

The receiving module is further configured to receive a HARQ process identifier configured by the network device. The second request is used to request the network device to allocate a HARQ process identifier.

Optionally, the HARQ process identifier is used for a current sidelink transmission or a subsequent sidelink transmission using the autonomous mode resource.

In another specific implementation, the sidelink configuration apparatus is in the combination mode of the scheduling mode and the autonomous mode. The transmission configuration of the SL CG includes at least a quantity of HARQ processes and a first parameter or a range of the first parameter for determining a HARQ process identifier. The processing module is further configured to determine the HARQ process identifier based on the time-frequency resource configuration of the SL CG, the quantity of HARQ processes, and the first parameter or the range of the first parameter, where the indication information includes the HARQ process identifier.

In another specific implementation, the sidelink configuration apparatus is in the combination mode of the scheduling mode and the autonomous mode. The processing module is further configured to:
determine a first parameter based on a current idle HARQ process; and
determine a HARQ process identifier based on the first parameter and the time-frequency resource configuration of the SL CG, where the indication information includes the HARQ process identifier.

The foregoing several solutions provide HARQ process configuration solutions in a scenario in which different modes coexist or switching between different modes is performed, to effectively avoid a HARQ process conflict when the different modes coexist or switching between the different modes is performed.

According to a tenth aspect, this application provides a sidelink configuration apparatus, including:
a receiving module, configured to receive indication information sent by a first terminal device, where the indication information is for determining a HARQ process identifier; and
a determining module, configured to determine the HARQ process identifier based on the indication information, where
the receiving module is further configured to receive, based on the HARQ process identifier, sidelink service data sent by the first terminal device.

In this solution, the indication information may be transmitted by using sidelink RRC, or may be transmitted by using a PSCCH (namely, SCI) or a PSSCH (namely, SL data).

According to an eleventh aspect, this application provides a sidelink configuration apparatus, including:
a sending module, configured to send indication information to a second terminal device, where the indication information is used to indicate that the first terminal device has service data to be sent; and
a receiving module, configured to receive feedback information fed back by the second terminal device, where the feedback information is used to indicate that the second terminal device has an idle HARQ process or has no idle HARQ process.

If the feedback information indicates that the second terminal device has an idle HARQ process, the sending module is further configured to send sidelink service data to the second terminal device.

According to a twelfth aspect, this application provides a sidelink configuration apparatus, including:
a receiving module, configured to receive indication information sent by a first terminal device, where the indication information is used to indicate that the first terminal device has service data to be sent;
a processing module, configured to determine that there is an idle HARQ process or that there is no idle HARQ process; and
a sending module, configured to send feedback information to the first terminal device, where the feedback information is used to indicate that there is an idle HARQ process or that there is no idle HARQ process.

If the feedback information indicates that there is an idle HARQ process, the receiving module is further configured to receive sidelink service data sent by the first terminal device.

According to a thirteenth aspect, this application provides a terminal device, including:
a processor, a memory, and a communication interface.

The memory is configured to store a program and data, and the processor invokes the program stored in the memory, to perform the sidelink configuration method provided in any implementation of the first aspect to the sixth aspect.

According to a fourteenth aspect, this application provides a chip, including:
a memory and a processor, where the memory stores code and data, the memory is coupled to the processor, and the processor runs the code in the memory, so that a chip performs the sidelink configuration method provided in any implementation of the first aspect to the sixth aspect.

According to a fifteenth aspect, which is not according to the invention but relates to an example useful for understanding the invention, this application provides a computer-readable storage medium. The computer-readable storage medium includes a program. When executed by a processor, the program is used to perform the sidelink configuration method provided in any implementation of the first aspect to the sixth aspect.

This application provides a sidelink configuration method and apparatus, a device, and a storage medium. In the conventional technology, before each sidelink transmission is performed, a terminal device at a transmit end sends SCI to a terminal device at a receive end. In this solution, transmission on information needed for sidelink transmissions is performed by using sidelink RRC, so that the terminal device at the receive end obtains a time-frequency resource configuration of sidelink transmissions, and further obtains a HARQ process identifier of each transmission. In this way, SCI sending does not need to be performed for a plurality of times subsequently. This effectively saves transmission resources on sidelink.

### BRIEF DESCRIPTION OF DRAWINGS

FIG. 1 is a schematic diagram of a V2X scenario according to this application;
FIG. 2 is a schematic flowchart of an embodiment 1 of a sidelink configuration method according to this application;
FIG. 3 is a schematic flowchart of an embodiment 2 of a sidelink configuration method according to this application;
FIG. 4 is a schematic flowchart of an embodiment 3 of a sidelink configuration method according to this application;
FIG. 5 is a schematic flowchart of an embodiment 4 of a sidelink configuration method according to this application;
FIG. 6 is a schematic flowchart of an embodiment 5 of a sidelink configuration method according to this application;
FIG. 7 is a schematic diagram of a structure of an embodiment 1 of a sidelink configuration apparatus according to this application;
FIG. 8 is a schematic diagram of a structure of an embodiment 2 of a sidelink configuration apparatus according to this application;
FIG. 9 is a schematic diagram of a structure of an embodiment 3 of a sidelink configuration apparatus according to this application;
FIG. 10 is a schematic diagram of a structure of an embodiment 4 of a sidelink configuration apparatus according to this application;
FIG. 11 is a schematic diagram of a structure of an embodiment 5 of a sidelink configuration apparatus according to this application;
FIG. 12 is a schematic diagram of a structure of an embodiment 6 of a sidelink configuration apparatus according to this application;
FIG. 13 is a schematic diagram of a structure of an embodiment 7 of a sidelink configuration apparatus according to this application;
FIG. 14 is a schematic diagram of a structure of an embodiment 8 of a sidelink configuration apparatus according to this application;
FIG. 15 is a schematic diagram of a structure of an embodiment 9 of a sidelink configuration apparatus according to this application; and
FIG. 16 is a schematic diagram of a structure of a terminal device according to this application.

### DESCRIPTION OF EMBODIMENTS

To make objectives, technical solutions, and advantages of embodiments of this application clearer, the following clearly and describes the technical solutions in the embodiments of this application with reference to accompanying drawings in the embodiments of this application. It is clearly that, the described embodiments are merely some rather than all of the embodiments of this application. All other embodiments obtained by a person of ordinary skill in the art based on the embodiments of this application on the premise of the technical solutions of this application fall within the protection scope of this application.

In addition, it should be understood that terms "first", "second", "third", "fourth", and the like (if any) in the specification, claims, and accompanying drawings of this application are used to distinguish between similar objects, and are not used to describe a specific order or sequence. It should be understood that data used in this way may be interchangeable under appropriate circumstances so that the embodiments of this application described herein can be implemented in an order other than those illustrated or described herein. A quantity of "one", "two", "five", and the like described in the embodiments are all examples for description, and a quantity in a specific implementation is not limited. Moreover, terms "include", "contain" and any other variant mean to cover non-exclusive inclusion, for example, a process, method, system, product, or device that includes a list of steps or units is not necessarily limited to those steps or units, but may include other steps or units not expressly listed or inherent to such a process, method, product, or device.

In the embodiments of this application, the terms "information (information)", "signal (signal)", "message (message)", "channel (channel)", and "signaling (signaling)" may sometimes be interchangeably used. It should be noted that, meanings expressed by the terms are consistent when differences between the terms are not emphasized. "Of (of)", "corresponding, related (corresponding, relevant)", and "corresponding (corresponding)" may be interchangeably used sometimes. It should be noted that meanings expressed by the terms are consistent when differences between the terms are not emphasized.

In this embodiment of this application, the "HARQ process" and the "HARQ process identifier" may sometimes be used interchangeably. It should be noted that meanings to be expressed by the "HARQ process" and the "HARQ process identifier" are consistent when differences are not emphasized. "Of (of)", "corresponding, related (corresponding, relevant)", and "corresponding (corresponding)" may be interchangeably used sometimes. It should be noted that meanings expressed by the terms are consistent when differences between the terms are not emphasized.

It should be understood that both UL and SL may include a plurality of standards, for example, the Long Term Evolution (Long Term Evolution, LTE) and the new radio (New Radio, NR). When the following specific comparison between a UL and an SL and between SLs is performed, specific standards are not limited. For example, the comparison may be performed between an NR UL and an NR SL, or may be performed between an NR UL and an LTE SL, or may be performed between an LTE UL and an NR SL. For example, for a same interface, the comparison between SLs is limited to comparison between an NR SL and an LTE SL.

Vehicle-to-everything (vehicle-to-everything, V2X) is considered as one of the most promising fields with clearest market requirements in the Internet of Things system. V2X features wide application space, great industry potential, and strong social benefits, and is of great significance to promote the innovation and development of the automobile and information communication industry, build new models and new forms of automobile and transportation services, promote the innovation and application of autonomous driving technologies, and improve traffic efficiency and safety. In vehicle-to-everything, vehicle information is provided via vehicle-mounted sensors and vehicle-mounted terminals, and vehicle to vehicle (vehicle to vehicle, V2V), vehicle to pedestrian (vehicle to pedestrian, V2P), and vehicle to infrastructure (vehicle to infrastructure) communication is implemented through various communication technologies. V2V is a main scenario that is discussed. With continuous development and successful application of wireless technologies, people pose higher service requirements for vehicle-to-everything, which requires the vehicle-to-everything to have a specific QoS (quality of service, quality of service) guarantee capability.

In a new radio (New Radio, NR) V2X, transmission on a physical uplink shared channel (Physical Uplink Shared Channel, PUSCH) and transmission on a physical sidelink shared channel (Physical Sidelink Shared Channel, PSSCH) cannot be simultaneously performed. In other words, when a sidelink (Sidelink, SL) resource overlaps an uplink (Uplink, UL) resource in time domain, only one of the PUSCH and the PSSCH can be selected and communicated.

In V2X communication, communication between user equipments (User Equipment, UE) may be in a sidelink (sidelink) manner. In the communication manner based on a sidelink technology, resource allocation on sidelink includes two modes:
Mode 1: A base station schedules resource allocation (hereinafter referred to as a scheduling mode, namely, the mode 1). When UE in a connected mode that performs V2X communication needs to transmit data on sidelink, the UE first needs to send a buffer status report (Buffer Status Report, BSR) to a base station, to report an amount of sidelink data that the UE needs to transmit currently. In this way, the base station allocates a sidelink resource of an appropriate size based on the data amount. If the UE currently has no uplink resource to report the BSR, a scheduling request (Scheduling Request, SR) may be triggered. If the UE is configured with an SR resource, the UE sends an SR request message to the base station by using the SR resource, to request the base station to allocate, to the UE, an uplink resource for sending the BSR. After receiving the SR request message, the base station allocates an uplink transmission grant to the UE based on a scheduling result, and the uplink transmission grant is used by the UE to send the BSR.
Mode 2: UE autonomously selects a resource (hereinafter referred to as an autonomous mode, namely, the mode 2). When the UE that performs sidelink communication needs to transmit data on sidelink, the UE may select a resource from a resource pool configured or preconfigured by a base station, to perform data transmission on the sidelink. The resource pool configured by the base station may be configured by using system information, or may be configured by using dedicated signaling after receiving a request that the user equipment needs to perform sidelink communication, or may be preconfigured.

When the UE performs V2X communication in one of the two resource selection modes described above, the network may configure the UE to perform in the other resource selection mode. In LTE V2X, the UE can be configured to perform in only one of the two resource selection modes. If the UE previously works in the scheduling mode, because a sidelink BSR is triggered for sidelink communication and data to be transmitted, and in this case, there is no uplink resource for reporting the BSR, an SR is triggered and is in a suspended state. On the premise that all suspended SRs are triggered by the sidelink BSR, if the UE working in the scheduling mode is reconfigured to work in the autonomous mode, all suspended SRs are canceled. In NR V2X, the UE may be configured to support both the scheduling mode and the autonomous mode.

In new radio (New Radio, NR) uplink communication, PUSCH transmission is classified into two types: uplink transmission with a dynamic grant and uplink transmission without a dynamic grant.

For the uplink transmission with a dynamic grant, the base station schedules a dynamic grant (dynamic grant, DG) to the UE. The UE sends a buffer status report (Buffer Status Report, BSR) to the base station, to request the base station to schedule an uplink resource. If there is no uplink resource for reporting the BSR, the UE needs to trigger a scheduling request (Scheduling Request, SR). After receiving the scheduling request of the UE, the base station sends downlink control information (Downlink Control Information, DCI) to the UE, and indicates time-frequency resource information of a UL grant in the DCI. In other words, the UE needs to monitor the DCI on a physical downlink control channel (Physical Downlink Control Channel, PDCCH) to obtain the UL grant.

The other type of PUSCH transmission is uplink transmission without a dynamic grant, that is, uplink transmission with an uplink grant configured by the base station for the UE (configured grant, CG). During transmission with a CG, the base station semi-statically configures an uplink resource for the UE, and the resource is periodic. After each periodicity, the UE may directly use the CG to send uplink data, and the base station does not need to deliver DCI, which reduces PDCCH overheads. This transmission mode is characterized by "an allocated resource can be used for a plurality of times". NR provides two types of CGs: a CG type 1 and a CG type 2.

Configured grant type 1: Configured by using RRC, the configured grant type 1 takes effect immediately after configuration without activation/deactivation mechanism, in other words, no DCI needs to be received.

Configured grant type 2: Some parameters, such as a periodicity and a quantity of associated HARQ processes, are configured by using RRC. configuredGrantConfig is configured, and is activated or deactivated by using L1 signaling. Specifically, the resource is activated or deactivated by using DCI. The UE can use a CG type 2 only after the CG type 2 is activated, and the UE needs to report an/a activation/deactivation acknowledgment MAC CE to the gNB.

In sidelink transmission of the conventional technology, a base station configures an SL CG for transmit end (Transmit, TX) UE. The TX UE calculates, based on a configured time frequency resource position of the SL CG, a hybrid automatic repeat request (Hybrid Automatic Repeat reQuest, HARQ) process identifier (process identifier, PID) corresponding to each CG transmission, and then adds the PID to SCI to indicate to a receive end (Receive, RX) UE. However, before each SL transmission, the TX UE needs to send SCI to the RX UE, which occupies a large quantity of SL resources.

To address the foregoing problem, this application provides a sidelink configuration method, so that during sidelink transmission, RX UE and TX UE configure/align SL CG configuration parameters. This application also provides a technical solution for avoiding a conflict of HARQ process IDs in different modes in a mode coexistence/switching scenario.

The following describes, by using some specific implementations, the sidelink configuration method provided in this application.

The technical solutions provided in this application are applicable to a plurality of communication systems. A communication system in which an entity needs to send transmission direction indication information, and another entity needs to receive the indication information may use the technical solutions in this application. For example, the technical solution is applicable to a 5G NR V2X system. During sidelink transmission, transmission resource configuration between terminal devices also includes two modes. One is a mode in which a network device schedules a resource, which may be referred to as a scheduling mode (equivalent to the foregoing mode 1). In this mode, the network device schedules and allocates resources. To be specific, a terminal device needs to send a BSR or a resource request to the network device first, so that the network device can allocate an appropriate sidelink transmission resource to the terminal device. The other is a mode in which the terminal device autonomously selects a resource, which may alternatively be referred to as an autonomous mode (equivalent to the foregoing mode 2). In this mode, when the terminal device needs to perform sidelink transmission, the terminal device may select an appropriate resource from a resource pool for transmission. The resource pool may be pre-specified or pre-configured by a network device. Optionally, the terminal device may alternatively be configured to be in a combination mode (also referred to as mode 1+mode 2) of the scheduling mode and the autonomous mode.

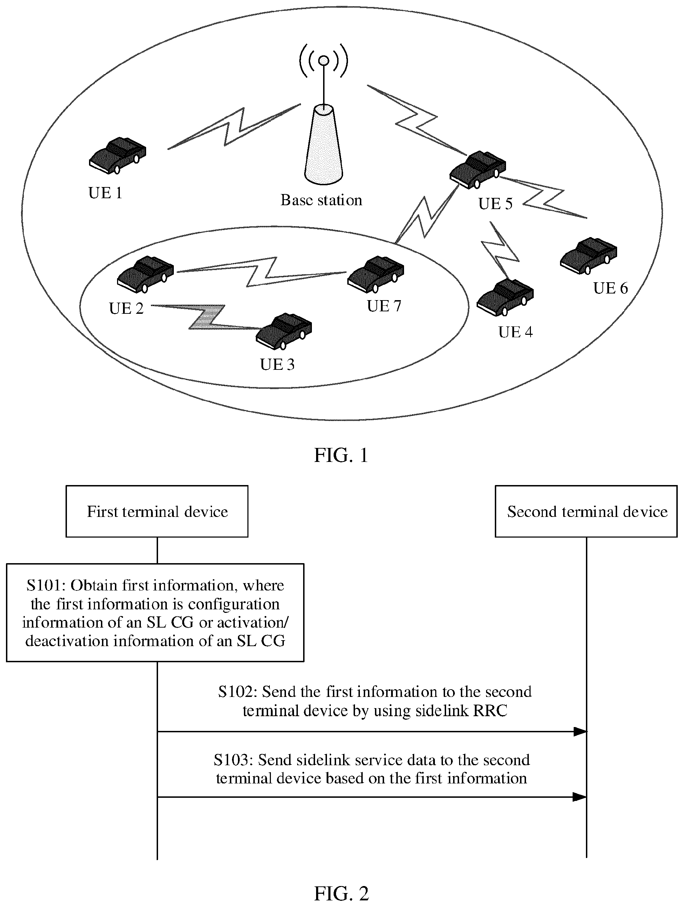

FIG. 1 is a schematic diagram of a V2X scenario according to this application. As shown in FIG. 1, a base station (Base station, BS) and UE 1 to UE 7 form a communication system. In the communication system, only the UE 1 and the UE 5 can send uplink data to the base station, and the base station receives the uplink data sent by the UE 1 and the UE 5. In the communication system, the base station may send downlink information to the UE 1, the UE 2, the UE 5, and so on. The UE 5 may also send downlink information to the UE 4, the UE 7, and the UE 6, or the UE 5 may also send information to the UE 7, the UE 4, and the UE 6 on sidelink. In addition, the UE 2, the UE 3, and the UE 7 may also form a communication system, and the UE 2 sends information to the UE 3 and the UE 7 on sidelink. FIG. 1 is merely an example of a transmission scenario. It should be understood that the technical solution of this application may be further applied to another scenario, and may be further applied to uplink transmission. This is not limited in this solution.

FIG. 1 shows a specific scenario. During actual application, the sidelink configuration method is mainly performed by terminal devices and a network device. The terminal device is an entity on a user side that is configured to receive or transmit a signal, for example, mobile phone UE or vehicle UE. In addition, the terminal devices support direct communication with each other. The network device is an entity on a network side that is configured to transmit or receive a signal, for example, a base station, a 5G gNB (a base station in a next-generation mobile communication network), a transmission reception point (TRP), or a network device (for example, a micro base station) of another 5G access network. The network device is connected to a core network device in a wireless or wired manner. The core network device and the network device may be different physical devices independent of each other, or functions of the core network device and logical functions of the network device may be integrated into a same physical device, or a part of functions of the core network device and a part of functions of the network device may be integrated into one physical device. In a specific implementation of the solution, a main implementation form includes a communication apparatus. The communication apparatus may be a terminal device, for example, a vehicle-mounted communication apparatus, an apparatus including the terminal device, for example, various types of vehicles, or an apparatus included in the first terminal device, for example, a system chip. The communication apparatus includes a corresponding module, unit, or means (means) for implementing the foregoing method. The module, unit, or means may be implemented by hardware, by software, or by hardware executing corresponding software. The hardware or the software includes one or more modules or units corresponding to the foregoing functions. This is not limited in this solution.

In the solution of this application, a transmission resource is a time domain resource and/or a frequency domain resource used to transmit data. A transmission occasion is also referred to as a transmission opportunity, and is an occasion on which transmission can be performed at a specified time domain resource position and frequency domain resource position. For example, during sidelink transmission, a frequency domain resource may be fixed, and a time domain resource may be periodically used; or a frequency domain resource is fixed, and a time domain resource may be periodically used, where on a preset frequency domain resource, each time period in time domain at which sidelink transmission can be performed is a transmission occasion of sidelink.

FIG. 2 is a schematic flowchart of an embodiment of a sidelink configuration method according to this application. As shown in FIG. 1, the sidelink configuration method is mainly applied between two terminal devices that perform sidelink transmission, and specifically includes the following steps:
S101: Obtain first information, where the first information is configuration information of an SL configured grant (Configured Grant, CG), or activation/deactivation information of an SL CG.

In this solution, an example in which the first information is configuration information of the SL configured grant (Configured Grant, CG), or the activation/deactivation information of the SL CG is used. In addition, the first information may alternatively be configuration information of an SL dynamic grant (dynamic grant, DG), or the first information is configuration information of an SL mode 2 resource/resource pool. A solution is the same, and details are not described herein again.

In this solution, it should be understood that a first terminal device is a terminal device at a transmit end, and a second terminal device is a terminal device at a receive end. In other words, the first terminal device can directly exchange with a network device side. For example, in the scenario shown in FIG. 1, the first terminal device may be the UE 5. Second terminal devices may be the UE 7, the UE 4, and the UE 6, and UE 5 can send data to the UE 7, the UE 4, and the UE 6 on sidelink. Alternatively, the first terminal device may be the UE 2. Second terminal devices may be the UE 3 and the UE 7. The UE 2 sends data to the UE 3 and the UE 7 on sidelink.

In the foregoing step, a network device configures the terminal devices to be capable of performing sidelink transmission, and configures the terminal devices with related configurations. The terminal devices are configured with at least a CG type 1 and/or a CG type 2. When the first terminal device needs to transmit sidelink data to the second terminal device, the first terminal device needs to exchange a resource and some other information for data transmission with the second terminal device. The resource and the some other information are referred to as the first information.

In a specific implementation of this solution, the first information may be the configuration information of the SL CG and/or the activation/deactivation information of the SL CG. The first information includes at least second indication information for determining a HARQ process identifier and/or a demodulation reference signal (Demodulation Reference Signal, DMRS) configuration. The first information may further include at least one of a service identifier, a time-frequency resource configuration of the SL CG, a periodicity of the SL CG, and a modulation and coding scheme (Modulation and Coding Scheme, MCS) parameter.

In a specific implementation in which the first terminal device obtains the first information, the first information includes the time-frequency resource configuration of the SL CG. The time-frequency resource configuration of the SL CG may be a resource configuration configured by the network device or agreed upon in a protocol. Therefore, before this step, the first terminal device needs to receive a transmission configuration that is of the SL CG and that is sent by the network device. The transmission configuration includes at least the time-frequency resource configuration of the SL CG. Alternatively, the time-frequency resource configuration of the SL CG may be selected by the first terminal device from a sidelink resource pool configured by the network device. This is not limited in this solution.

The first information includes the second indication information for determining the HARQ process identifier. In a specific implementation, the second indication information may be the HARQ process identifier determined by the first terminal device, or may be a parameter or other information for determining the HARQ process identifier. For the first terminal device, one sidelink transmission may use one HARQ process or may use a plurality of HARQ processes. The sidelink transmission may be transmission with a dynamic grant in a scheduling mode, or may be transmission with a configured grant (namely, a semi-static grant). A manner of determining one or more HARQ process identifiers is similar to a manner of indicating the HARQ process identifier to the second terminal device, and includes at least the following several manners.

In a first manner, the transmission configuration of the SL CG configured by the network device includes a first parameter for calculating the HARQ process identifier, and the first terminal device obtains the HARQ process identifier through calculation based on the first parameter and the time-frequency resource configuration of the SL CG. The second indication information may directly indicate the HARQ process identifier.

For example, the first parameter is an offset for calculating the HARQ process identifier. After the first terminal device receives the first information that is provided by the network device and that includes a configuration of the SL CG, for example, after the first terminal device receives the first information by using RRC signaling or downlink control signaling, the first terminal device calculates a value based on parameters such as a slot number or a symbol number in which a time domain resource of the SL CG is located, a quantity of HARQ processes supported by the SL CG, and a system frame number, and calculates a final HARQ process identifier based on the value and the offset, for example, by adding the value and the offset or subtracting the offset from the value. The second indication information is the HARQ process identifier obtained through calculation.

In a second manner, the transmission configuration of the SL CG configured by the network device includes the first parameter for calculating the HARQ process identifier, the first terminal device does not perform calculation, and the second indication information may indicate the first parameter and the time-frequency resource configuration of the SL CG to the second terminal device. The second terminal device determines the HARQ process identifier through calculation.

For example, the first parameter is an offset for calculating the HARQ process identifier. After the first terminal device receives the first information provided by the network device, the first information may be the configuration information of the SL CG, and the first information includes parameters such as time-frequency domain resource information and the periodicity of the configured grant. Alternatively, the first information includes only information that needs to be exchanged/transferred between the first terminal and the second terminal. The first information and the configuration information of the SL CG may be a same message, may be different messages, or may have an inclusion relationship. This is not limited herein.

Optionally, the first terminal device receives the first information by using the RRC signaling or downlink control signaling, or receives a configuration message or signaling that includes the first information, and the first information includes the first parameter and position information of a time domain resource and/or a frequency domain resource of the SL CG. The first terminal device forwards, to the second terminal device by using sidelink control signaling or a sidelink RRC message, parameters in the first information that are used to calculate the second indication information, which include but are not limited to a quantity of HARQ processes and the first parameter. After receiving the first information, the second terminal device calculates a final HARQ process identifier by using time domain resource information of the sidelink and the first parameter in the first information, and receives, at a corresponding time domain position by using the calculated HARQ process identifier, sidelink transmission sent by the first terminal. A method for calculating the second indication information by the second terminal device may be the same as the method for calculation in the example of the first manner.

In a third manner, the network device does not configure a corresponding parameter, and the first terminal device determines the first parameter for calculating the HARQ process identifier. For example, the first terminal device selects the first parameter based on an identifier of an idle HARQ process. Specifically, when a HARQ process corresponding to a HARQ process identifier calculated by the first terminal device based on the time domain position of the configured grant is occupied, the first terminal device selects one HARQ process from idle HARQ processes, and performs calculation on the first parameter and the HARQ process identifier, for example, adding the first parameter to the HARQ process identifier, so that the HARQ process identifier calculated by using the time domain position of the configured grant is equal to an identifier of the selected HARQ process. An idle HARQ process may be understood as that the terminal device may transmit a TB by using the HARQ process, or the HARQ process is not occupied by another transmission. The first terminal device may calculate the HARQ process identifier based on the determined first parameter and the time-frequency resource configuration, and then directly indicate a result to the second terminal device by using the second indication information. Alternatively, the first terminal device may indicate the determined first parameter to the second terminal device, and the second terminal device determines the HARQ process identifier through calculation.

Optionally, the first information may further include the DMRS configuration. For transmission with the SL CG, the network device does not include DMRS configuration information in the transmission configuration of the SL CG, and the first terminal device selects a DMRS configuration, in other words, the first terminal determines the DMRS configuration for transmitting sidelink data. In a specific implementation of this solution, the first terminal device selects one from a plurality of DMRS configurations. For example, if the first terminal device changes quickly in speed, or a radio link environment between the first terminal device and the second terminal device changes sharply, the first terminal device selects a DMRS configuration with dense distribution in time domain.

S102: Send the first information to the second terminal device by using sidelink radio resource control (Radio Resource Control, RRC).

The second terminal device receives the first information sent by the first terminal device by using the sidelink RRC.

Optionally, in this solution, the first information may alternatively be sent to the network device by using sidelink control information (sidelink control information, SCI).

In this step, the sidelink RRC includes PC5 RRC. In a specific implementation of this solution, the first information may be simultaneously sent to the second terminal device by using a same sidelink RRC message. The second indication information may alternatively be transmitted to the second terminal device by using another sidelink RRC message. The second indication information may directly indicate the HARQ process identifier, or may be a parameter for calculating the HARQ process identifier. This is not limited in this solution. In addition, the first information may be further sent to a plurality of receiving terminal devices by using sidelink RRC messages. For example, in multicast communication, the first terminal sends the first information to a group of at least one second terminal by using a sidelink RRC message.

S103: Send sidelink service data to the second terminal device based on the first information.

After obtaining the first information by using the sidelink RRC, the second terminal device only needs to receive, based on the first information, the sidelink service data sent by the first terminal device.

In the conventional technology, before each sidelink transmission is performed, a terminal device at a transmit end sends SCI to a terminal device at a receive end. According to the sidelink configuration method provided in this embodiment, in this solution, transmission on information needed for sidelink transmissions is performed by using the sidelink RRC, so that the terminal device at the receive end obtains a time-frequency resource configuration of sidelink transmissions, and further obtains a HARQ process identifier of each transmission. In this way, SCI sending does not need to be performed for a plurality of times subsequently or a HARQ process identifier does not need to be indicated in a subsequent SCI. This effectively reduces a size (namely, a quantity of occupied bits) of control information and saves transmission resources on sidelink.

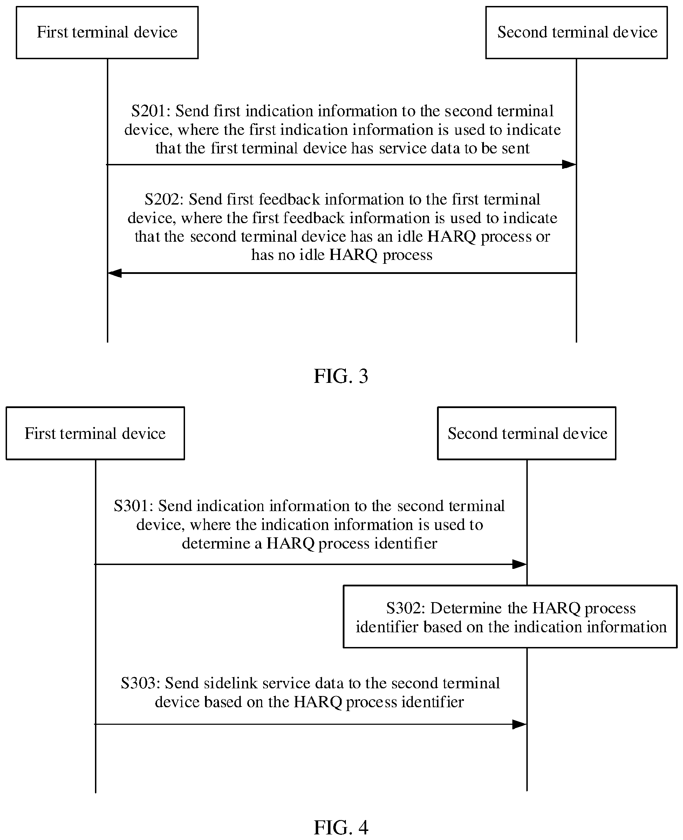

FIG. 3 is a schematic flowchart of the embodiment of a sidelink configuration method according to this application. As shown in FIG. 3, based on the foregoing embodiment, in a specific implementation, to improve transmission efficiency and reliability, a usage status of or a quantity of processes may further be exchanged between a transmit end device and a receive end device. In this embodiment, an example in which the transmit end is the first terminal device and the receive end is the second terminal device is used for description. This solution is also applicable to communication between a terminal device and a network device. For example, the first terminal device may be replaced by a network device. Correspondingly, the second terminal device is a terminal device communicating with the network device. The process may be implemented in a process of determining the first information, or may be implemented before determining the first information. The process specifically includes the following steps.

S201: Send first indication information to the second terminal device, where the first indication information is used to indicate that the first terminal device has service data to be sent.

Optionally, the first indication information may be used to request the second terminal device to feed back, to the first terminal device, whether there is an idle HARQ process available for receiving.

In this solution, when determining the first information or before determining the first information, the first terminal device may exchange with the second terminal device a quantity or a usage status of HARQ processes or whether there is an idle process, to avoid transmission failure.

Specifically, when the first terminal device at the transmit end needs to send a sidelink service to the second terminal device at the receive end, the first terminal device first sends indication information, namely, the first indication information, to the second terminal device, to indicate that the first terminal device needs to send sidelink data. The first indication information may be sent by using sidelink RRC, or may be sent by using a PSCCH (that is, SCI) or a PSSCH (that is, SL data) (in a form of data, a MAC CE, or the like, where the MAC CE may be a newly defined MAC CE). This is not limited in this solution. If the first indication information is sent by using the PSCCH, SCI in a same format or SCI in different formats corresponding to different SL transmissions may be used. The indication may be included in SCI in a first phase or SCI in a second phase. Information included in the SCI in the two phases is different. The first terminal first sends the SCI in the first phase, and then sends the SCI in the second phase.

The second terminal device receives the first indication information sent by the first terminal device, and then determines, based on the first indication information, that the second terminal device has an idle HARQ process or has no idle HARQ process. In this solution, if all available processes of the second terminal device are occupied, it is determined that there is no idle HARQ process. It should be understood that an occupied process is a process that is being used by the second terminal device, that is waiting for feedback, whose buffer is not empty, that is waiting for retransmission scheduling, that is waiting for retransmission resources, or that is not yet released.

S202: Send first feedback information to the first terminal device, where the first feedback information is used to indicate that the second terminal device has an idle HARQ process or has no idle HARQ process.

In this step, after determining whether there is an idle HARQ process, the second terminal device needs to feed back to the first terminal device, in other words, send the first feedback information. The first terminal device receives the first feedback information fed back by the second terminal device. In this solution, the first feedback information is mainly used to indicate that the second terminal device has an idle HARQ process or has no idle HARQ process.

For example, the second terminal device receives the first indication information sent by the first terminal device, and determines whether there is an idle HARQ process, or determines whether there is an idle HARQ process in HARQ processes managed by a HARQ entity corresponding to an indicated carrier or of a corresponding carrier. The carrier may be a carrier indicated by the first terminal, a carrier associated with a resource pool, or a carrier associated with the first indication information. The first terminal device may indicate, in the first indication information, time-frequency resource information used to send the first feedback information to the second terminal device, for example, a moment or a time interval or a slot interval or a symbol interval of sending the feedback. If the second terminal device determines that there is an idle HARQ process, the second terminal device sends the first feedback information to the first terminal device, where the first feedback information may be a MAC CE, an ACK or a NACK, or a sidelink RRC message.

For example, it is assumed that the first feedback information is an ACK or a NACK. If the second terminal device determines that there is an idle HARQ process, the second terminal device sends the ACK to the first terminal device; otherwise, the second terminal device sends the NACK. If the first terminal device does not receive the ACK or the NACK fed back by the second terminal device, the first terminal device considers that the first terminal device has no idle HARQ process. For example, if the first terminal device does not receive, at a fixed moment or on a fixed time-frequency resource, the ACK fed back by the second terminal device, the first terminal device considers that the second terminal device has no idle HARQ process, that is, the first terminal device considers that the second terminal device cannot receive transmission. Alternatively, if the first terminal device does not receive, at a fixed moment or on a fixed time-frequency resource, the NACK fed back by the second terminal device, the first terminal device considers that the second terminal device has an idle HARQ process, and sends sidelink transmission. Alternatively, if the first terminal device does not receive, at a fixed moment or on a fixed time-frequency resource, the NACK fed back by the second terminal device, the first terminal device sends the sidelink transmission.

In a specific implementation, the first feedback information may further indicate a specific process identifier of an idle HARQ process of the second terminal device. This is not limited in this solution.

For example, after receiving the first indication information of the first terminal device, the second terminal device determines that there is an idle HARQ process, and indicates at least one idle HARQ process number to the first terminal device. For example, one HARQ process identifier is indicated in the first feedback information sent by the second terminal device to the first terminal device, which is referred to as a first HARQ process identifier hereinafter. After the first feedback information sent by the second terminal device is received, when transmitting a TB1, the first terminal device selects any idle HARQ process to process the TB1, or selects any idle HARQ process from HARQ processes corresponding to the carrier, where the selected HARQ process corresponds to a second HARQ process identifier. The first terminal device establishes an association relationship between the first HARQ process identifier fed back by the second terminal device and the second HARQ process identifier. Optionally, the first terminal device retains the association relationship. The first terminal device includes the first HARQ process identifier in SCI corresponding to transmission of the TB1, and the second terminal device receives the TB1 by using a HARQ process corresponding to the first HARQ process identifier. Optionally, the second terminal device further receives retransmission of the TB1 by using the HARQ process corresponding to the first HARQ process identifier.

When the second terminal device determines that there is an idle process, that is, the first feedback information indicates that the second terminal device has an idle HARQ process, the first terminal device may send sidelink service data to the second terminal device based on the first information.

In another implementation of this solution, the first terminal device may further send a request to the second terminal device, to notify the second terminal device to receive sidelink data, so that after the first terminal device sends the sidelink service data, the second terminal device may select an idle HARQ process to receive the data. Optionally, the second terminal device may also feed back to indicate that the second terminal device has an idle HARQ process or has no idle HARQ process. This is not limited in this solution.

Optionally, in another specific implementation of this solution, when the first terminal device misses detecting the first feedback information,
if the first terminal device does not receive the first feedback information sent by the second terminal device, the first terminal device considers that the first terminal device has no idle HARQ process. For example, if the first terminal device does not receive, at a fixed moment or on a fixed time-frequency resource, the ACK fed back by the second terminal device, the first terminal device considers that the second terminal device has no idle HARQ process, the first terminal device considers that the second terminal device cannot receive transmission. Alternatively, the first terminal device considers that the first terminal device has an idle HARQ process, and still performs SL transmission.

In another implementation of this solution, the first indication information fed back by the second terminal device to the first terminal may alternatively be a quantity of idle HARQ processes of the second terminal device, or a quantity of HARQ processes corresponding to a HARQ entity corresponding to a carrier indicated by the first terminal device, to notify the first terminal device that the second terminal device has a capability to receive sidelink data, so that the first terminal device determines a quantity of HARQ processes of the first terminal device to be occupied by transmission of a sidelink service or on a sidelink resource.

For example, the first terminal device needs to send the sidelink service data on the SL CG. Optionally, the first terminal device sends the first indication information to the second terminal device. After receiving the first indication information, the second terminal device sends the first feedback information to the first terminal device. The first feedback information includes the quantity of idle HARQ processes of the second terminal device. For example, if the first feedback information indicates that at the time there are five idle HARQ processes available for receiving, the first terminal device may use two HARQ processes for an SL CG resource, for example, use a HARQ process 1 for transmission on a transmission occasion 1 of the SL CG resource, and use a HARQ process 2 for transmission on a transmission occasion 2. If the first feedback information indicates that at the time there are two idle HARQ processes available for receiving, the first terminal device may use one HARQ process for the SL CG resource, that is, a HARQ process 1 is applicable to transmission on all transmission occasions of the SL CG.

Optionally, the first terminal device may determine, based on the quantity of idle HARQ processes fed back by the second terminal device, a quantity of HARQ processes used for sidelink transmission sent to the second terminal device. For example, a threshold may be defined. If the quantity of idle HARQ processes fed back by the second terminal device is greater than or equal to the threshold, the first terminal transmits data by using a plurality of HARQ processes. This is not limited in this solution.

According to the sidelink configuration method provided in this embodiment, before sidelink service data transmission, the terminal device at the transmit end and the terminal device at the receive end may further exchange the usage status of the HARQ processes. Then the terminal device at the transmit end and the terminal device at the receive end performs data transmission. This effectively prevents data transmission failure and other problems that occur because HARQ processes at the receive end are all occupied, and improves efficiency of data transmission on the sidelink.

Based on any one of the foregoing embodiments, the following describes specific implementations of the solution by using examples.

For example, the terminal device is UE, and the network device is a base station. For the SL CG type 1, the base station configures an SL CG type 1 for TX UE, and then the TX UE transfers a configuration of the SL CG type 1 to RX UE by using PC5 RRC. In addition, the TX UE and the RX UE further need to exchange one or more of the following information.

### (1) Offset (equivalent to the first parameter for determining the HARQ process identifier in the foregoing embodiments)

Case 1: It is assumed that one SL CG occupies one HARQ process. That is, for one SL CG resource, one HARQ process is used for transmission on all transmission occasions. Optionally, the base station determines the offset for calculating a HARQ process identifier, and carries the offset in a transmission configuration of the SL CG type 1 and sends to the TX UE, or carries the offset in another message and sends to the TX UE. After receiving the configuration of the SL CG, the TX UE indicates the offset or the HARQ process identifier obtained through calculation to the RX UE by using PC5-RRC. The RX UE calculates a HARQ process identifier corresponding to each SL CG transmission occasion based on the received offset and time-frequency resource configuration of the SL CG. Alternatively, when the TX UE indicates the HARQ process identifier obtained through calculation to the RX UE, the RX UE directly uses the HARQ process identifier indicated by the TX UE. That is, the RX UE considers that the TX UE uses the indicated HARQ process identifier for all sidelink transmissions with the SL CG resource. A HARQ process used by the RX UE to receive transmission with the SL CG may be the same as or different from the HARQ process identifier indicated by the TX UE.

Case 2: If one SL CG occupies a plurality of HARQ processes, that is, for one SL CG resource, different HARQ processes may be used for transmission on different transmission occasions, optionally, a base station determines the offset for calculating a HARQ process identifier, and carries the offset in the configuration of the SL CG type 1 and sends to the TX UE. After receiving the configuration of the SL CG, the TX UE indicates the offset to the RX UE by using PC5-RRC. The RX UE calculates a HARQ process identifier corresponding to each SL CG transmission occasion based on the received offset and time-frequency resource configuration of the SL CG.

Case 3: If one SL CG occupies a plurality of HARQ processes, optionally, the UE determines the offset for calculating the HARQ process identifier, that is, a base station does not indicate the offset to the TX UE by using the configuration of the SL CG type 1. After receiving the configuration of the SL CG, the TX UE indicates the offset that the TX UE selects to the RX UE by using the PC5-RRC. The RX UE calculates a HARQ process identifier corresponding to each SL CG transmission occasion based on the received offset and time-frequency resource configuration of the SL CG.

### (2) DMRS configuration

For transmission with the SL CG, the base station does not include DMRS configuration information in the configuration of the SL CG. The UE selects the DMRS configuration information.

In addition, when receiving a configuration of the SL CG configured by an NW, the TX UE selects an initial DMRS configuration, includes the DMRS configuration in configuration information of the SL CG, and transfers to the RX UE by using PC5-RRC. After receiving the configuration information of the SL CG, when receiving, on a time-frequency resource corresponding to the SL CG, data sent by the TX UE, the RX UE performs demodulation by using the DMRS configuration carried in the configuration of the SL CG. If the TX UE determines to change the DMRS configuration, the TX UE uses the PC5-RRC to indicate an updated DMRS configuration to the RX UE, and the RX UE can demodulate SL information sent by the TX UE based on the updated DMRS configuration.

### (3) HARQ process identifier (process identifier, PID), also referred to as a process number

In all initial transmissions and retransmissions for one TB, the TX UE uses a HARQ process identifier used for an initial transmission (that is, the first transmission) of the TB in SCI corresponding to each transmission. For example, for a same transport block (Transport Block, TB), when a HARQ PID corresponding to a retransmission resource used by the TX UE is inconsistent with a HARQ PID used for an initial transmission of the TB, in other words, the HARQ process identifier used when the TX UE initially transmits the TB is inconsistent with the HARQ process identifier used when the TX UE retransmits the TB, SCI sent by the TX UE for a retransmission of the TB carries the HARQ PID used for the initial transmission of the TB, instead of the HARQ PID corresponding to the retransmission resource. After receiving the SCI, the RX UE is aware that subsequent transmission corresponding to the SCI is retransmission corresponding to the initial transmission of the TB corresponding to the HARQ ID indicated in the SCI.

According to the sidelink configuration method provided in this application, configuration parameters between the transmit end terminal device and the receive end device in sidelink can be aligned in the foregoing manner, and a waste of transmission resources of the sidelink can be reduced.

FIG. 4 is a schematic flowchart of specific implementation of a sidelink configuration method according to this application. As shown in FIG. 4, an improved sidelink configuration method in this embodiment is mainly used to resolve HARQ process allocation between a terminal device at a transmit end and a terminal device at a receive end. Specifically, the method includes the following steps.

S301: Send indication information to a second terminal device, where the indication information is for determining a HARQ process identifier.

In this step, a first terminal device may determine the HARQ process identifier by itself or based on configuration of a network device, and the second terminal device receives the indication information sent by the first terminal device, where the indication information is for determining the HARQ process identifier. Specifically, the indication information may directly indicate one or more HARQ process identifiers that the first terminal device determines to use, or may be a parameter for determining the HARQ process identifier and other information. This solution is not limited. The indication information may be transmitted by using sidelink RRC, or may be transmitted by using a physical sidelink control channel (Physical Sidelink Control Channel, PSCCH) (that is, the first terminal device sends the indication information by using SCI) or a physical sidelink shared channel (Physical Sidelink Shared Channel, PSSCH) (that is, SL data).

Optionally, in a specific implementation of this solution, during sidelink data transmission, the network device needs to perform related configuration, and configure a related time-frequency resource and another transmission parameter. Therefore, before this step, the first terminal device further needs to receive a transmission configuration that is of a sidelink configured grant SL CG and that is sent by the network device. The transmission configuration of the SL CG includes at least a time-frequency resource configuration of the SL CG.

S302: Determine the HARQ process identifier based on the indication information.

In this solution, after receiving the indication information, the second terminal device may determine, based on the indication information, one or more HARQ process identifiers for receiving on sidelink.

S303: Send sidelink service data to the second terminal device based on the HARQ process identifier.

In this step, after both the first terminal device and the second terminal device determine the HARQ process identifier of transmission sidelink, the first terminal device may send the sidelink service data based on the HARQ process identifier. The second terminal device may receive the sidelink service data based on the determined HARQ process identifier.

In a specific implementation, the sidelink service data is transmitted on the time-frequency resource configured by the network device, that is, the first network device transmits the sidelink service data to the second terminal device based on the time-frequency resource configuration of the SL CG and the HARQ process identifier.

Transmission resource configuration between the terminal devices also includes two modes. One is a mode in which the network device schedules resources, which may be referred to as a scheduling mode (equivalent to the foregoing mode 1). The other is a mode in which a terminal device autonomously selects resources, which may alternatively be referred to as an autonomous mode (equivalent to the foregoing mode 2). However, during sidelink transmission, there is a scenario in which a plurality of modes coexist and a scenario in which switching between different modes is performed. In these scenarios, HARQ process allocation during sidelink transmission also becomes an urgent problem to be resolved.

The first terminal device needs to send, to the second terminal device, indication information for determining a HARQ process. First, the first terminal device needs to obtain the indication information and then indicate the indication information to the second terminal device. This application provides several specific manners of obtaining first indication information.

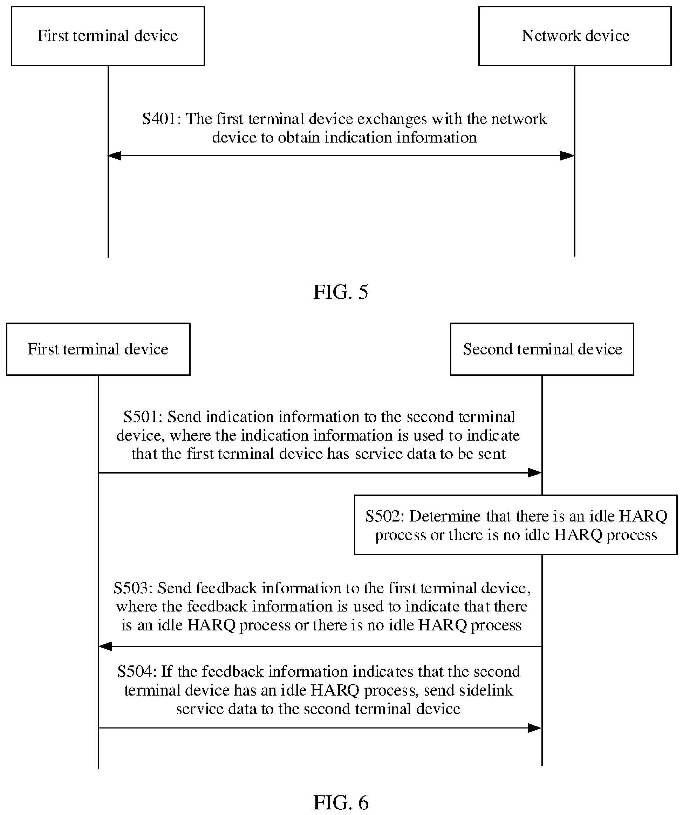

FIG. 5 is a schematic flowchart of a specific implementation of a sidelink configuration method according to this application. As shown in FIG. 5, in the foregoing embodiments, in a specific implementation, the first terminal may obtain the indication information based on exchange with the network device. The method specifically includes the following step.

S401: The first terminal device exchanges with the network device to obtain the indication information.

In this step, to obtain the indication information indicating a HARQ process, the first terminal device needs to send a request or report information to the network device, so that the network device can allocate a HARQ process identifier or a HARQ process. This specifically includes the following several cases:
1. The first terminal device sends a first request to the network device, where the first request is used to request the network device to allocate a HARQ process identifier or a HARQ process, and receives a new range of process identifiers reconfigured by the network device or a process identifier configured by the network device. The indication information includes a process identifier determined based on the range of process identifiers or the configured process identifier. In this solution, regardless of a working mode of the first terminal device at the transmit end, the first terminal device at the transmit end can directly send the first request to the network device, to request the network device to allocate the range of process identifiers or the configured process identifier, and then send to the second terminal device by using the indication information.
2. When the first terminal device switches from the autonomous mode to a combination mode of the scheduling mode and the autonomous mode, namely, a scenario in which the autonomous mode and the scheduling mode coexist, the first terminal device sends report information to the network device, where the report information is used to report an identifier of a process occupied by the autonomous mode, and then receives a process identifier configured by the network device for the scheduling mode and/or a process identifier or a range of process identifiers configured by the network device for the autonomous mode. In sidelink transmission, after determining the process identifier, the first terminal device sends the process identifier to the second terminal device at the receive end by using the indication information.

In this solution, there may be one or more process identifiers configured by the network device for the scheduling mode. It should be further understood that an occupied process is a process that the first terminal device at the transmit end is using, that is waiting for feedback, whose buffer is not empty, that is waiting for retransmission scheduling, that is waiting for retransmission resources, or that is not yet released.

3. In a scenario in which the first terminal device switches from the combination mode of the scheduling mode and the autonomous mode to the scheduling mode, the first terminal device sends report information to the network device, where the report information is used to report an identifier of a process occupied by an SL CG, so that the network device subsequently allocates a HARQ process identifier to the first terminal device. Optionally, in the mode switching scenario, the network device may reconfigure HARQ process information for the SL CG, where the HARQ process information includes one or more of the following: a quantity of HARQ processes, a first parameter for calculating a HARQ process identifier, a HARQ process identifier, or the like.

In this solution, there may be one or more process identifiers configured by the network device for the scheduling mode. It should be further understood that an occupied process is a process that the terminal device at the transmit end is using, that is waiting for feedback, whose buffer is not empty, that is waiting for retransmission scheduling, that is waiting for retransmission resources, or that is not yet released.

In addition to the foregoing several manners of exchange with the network device to obtain the indication information, the first terminal device in this application may further determine the indication information by using the following several solutions.

4. When the first terminal device switches from the scheduling mode to the combination mode of the scheduling mode and the autonomous mode, in other words, in a scenario in which the scheduling mode and the autonomous mode coexist, the first terminal device performs sidelink transmission that needs to use an autonomous mode resource, and selects the HARQ process from a range of process identifiers preconfigured or configured by the network device, where the HARQ process is associated with one HARQ process identifier. For sidelink transmission in the scheduling mode, the first terminal device performs transmission based on a HARQ process identifier configured by the network device. In this solution, the indication information includes the HARQ process identifier, and can be directly indicated to the second terminal device at the receive end.

5. When the first terminal device is in the combination mode of the scheduling mode and the autonomous mode, for sidelink transmission that needs to use a scheduling mode resource, the first terminal device uses a HARQ process identifier preconfigured or configured by the network device; and for sidelink transmission that needs to use an autonomous mode resource, the first terminal device sends a second request to the network device, and receives a HARQ process identifier configured by the network device, where the second request is used to request the network device to allocate a HARQ process identifier or a HARQ process.

In this solution, it should be understood that the HARQ process identifier is used for a current sidelink transmission or a subsequent sidelink transmission using the autonomous mode resource.

6. The first terminal device is in the combination mode of the scheduling mode and the autonomous mode, and the network device further configures, in a transmission configuration of an SL CG, a quantity of HARQ processes and a first parameter or a range of the first parameter for determining a HARQ process identifier. The first terminal device may determine the HARQ process identifier based on a time-frequency resource configuration of the SL CG, the quantity of HARQ processes, and the first parameter or the range of the first parameter. The indication information includes the HARQ process identifier, and the HARQ process identifier can be directly indicated to the second terminal device.

7. The first terminal device is in the combination mode of the scheduling mode and the autonomous mode, and the first terminal device may further determine a first parameter based on a current idle HARQ process; and determines a HARQ process identifier based on the first parameter and a time-frequency resource configuration of an SL CG. Then, the determined HARQ process identifier is indicated to the second terminal device by using the indication information.

According to the sidelink configuration method provided in the foregoing embodiment, in a specific implementation, a HARQ process configuration solution in a scenario in which different modes coexist or switching between different modes is performed is provided, to effectively avoid a HARQ process conflict when the different modes coexist or switching between the different modes is performed.

Based on the foregoing embodiment, there are generally two solutions for process allocation in the scenario in which the different modes coexist or switching between the different modes is performed. One is to be completely controlled by the network device. The other is that the network device configures a range for selection of the terminal device or the terminal device determines by itself. An example in which the network device is a base station and the terminal device is UE is used below to describe the solutions for the process allocation in the scenario in which the different modes coexist or switching between the different modes is performed.

Solution 1: The base station takes complete control. The base station configures or reconfigures a range of HARQ process identifiers.

The base station preconfigures, for the UE, a service/logical channel (logical channel, LCH)/QoS low in the mode 2, or a range of HARQ process identifiers (process IDs) that the terminal device working in the mode 2 is allowed to use, and allocates a HARQ process identifier, a quantity of SL CGs, and an optional parameter (offset) for a mode 1 SL resource. In this solution, it should be understood that a MAC layer provides a data transmission service on a logical channel, and a logical channel type set is defined for different types of data transmission services provided by the MAC layer. Logical channels are usually classified into two categories: control channels and traffic channels. The control channel is used to transmit control plane information, and the traffic channel is used to transmit user plane information.

When the UE switches from the mode 1 to mode 1+2, (in other words, switches from the scheduling mode to the combination mode of the scheduling mode and the autonomous mode), the UE selects a HARQ process identifier from a range of preconfigured HARQ process identifiers for SL transmission that needs to use a mode 2 resource. When mode 2 HARQ processes are insufficient, that is, all HARQ process identifiers in the range of preconfigured HARQ process identifiers are occupied, the UE requests the base station to allocate more HARQ processes. After receiving the request, the base station reallocates a HARQ process identifier or a range of HARQ process identifiers.

When the UE switches from the mode 2 to the mode 1+2, the UE reports, to the base station, an identifier of a HARQ process occupied for the mode 2, so that the base station avoids scheduling an identifier of a HARQ process that conflicts with the identifier of the HARQ process occupied by the mode 2 when scheduling an identifier of a HARQ process for the mode 1. Optionally, the base station further determines a range of HARQ process identifiers allowed to be used for the mode 2 based on the mode 2 HARQ process identifier reported by the UE. Alternatively, the base station preconfigures a range of HARQ process identifiers used for the mode 2. When the UE switches from the mode 1 to the mode 1+2 or works in the mode 1+2, a quantity of HARQ process identifiers occupied for the mode 2 is reported, or a HARQ process bitmap is defined, and a usage status of the HARQ processes is reported periodically or event-triggered.

Solution 2: The base station takes complete control.

In this solution, a HARQ process identifier corresponding to a mode 1 resource is completely configured/determined by the base station and indicated to the transmit end (TX) UE. However, for SL transmission in the mode 2, in each transmission, the TX UE needs to send a request to the base station, to request the base station to allocate a HARQ process identifier to the UE.

Alternatively, when the UE works in the mode 1+2, regardless of whether a transmission is in the mode 1 or the mode 2, the TX UE needs to send a request to the base station for each transmission, to request the base station to allocate a HARQ process identifier to the UE.

Solution 3: The base station provides a parameter (offset) range, or the UE determines a parameter (offset) by itself.

When the UE works in the mode 1+2, the base station indicates, in each configuration of an SL CG, a quantity of HARQ processes used by the SL CG and an offset range. For determining each HARQ process identifier specifically used for each transmission occasion of the SL CG, the UE selects an offset value from the offset range, calculates a HARQ process identifier corresponding to a transmission occasion jointly based on a time domain resource position of the transmission occasion and the quantity of HARQ processes used by the SL CG to which the transmission occasion belongs, and then indicates the HARQ process identifier corresponding to the transmission occasion to the RX UE.

Alternatively, the base station does not provide an offset range, and an offset value for calculating a HARQ process identifier is completely determined by the UE. In other words, the UE determines, based on a current idle HARQ PID of the UE, the offset for calculating a HARQ PID.

When the UE switches from the mode 1+2 to the mode 1, the UE reports an identifier of an occupied HARQ process or a quantity of HARQ processes occupied by the SL CG. Optionally, if no transmission with the SL CG is performed or the UE does not use the SL CG during the switching, the base station reconfigures a quantity of HARQ processes and/or a HARQ process identifier and/or an offset for the SL CG after the mode switching, where a configuration manner may be an RRC message (for example, an RRC message that provides a configuration of the SL CG), a DCI message, or the like. This solution is not limited.

FIG. 6 is a schematic flowchart of the embodiment of a sidelink configuration method according to this application. As shown in FIG. 6, an improved sidelink configuration method in this embodiment is mainly used for exchange of a usage status of HARQ processes between a terminal device at a transmit end and a terminal device at a receive end. Specifically, the method includes the following steps.

S501: Send indication information to a second terminal device, where the indication information is used to indicate that a first terminal device has service data to be sent.

In this step, before the first terminal device needs to send sidelink service data to the second terminal device, the first terminal device may exchange a quantity of HARQ processes or a process usage status with the second terminal device, to avoid transmission failure.

Specifically, when the first terminal device at the transmit end needs to send a sidelink service to the second terminal device at the receive end, the first terminal device first sends the indication information to the second terminal device, to indicate that the first terminal device needs to send sidelink data. The indication information may be sent by using sidelink RRC, or may be sent by using a PSCCH (namely, SCI) or a PSSCH (namely, SL data). This solution is not limited in this solution.

S502: Determine that there is an idle HARQ process or that there is no idle HARQ process.

In this step, the second terminal device receives the indication information sent by the first terminal device, and then determines, based on the indication information, that the second terminal device has an idle HARQ process or has no idle HARQ process. In this solution, if all available processes of the second terminal device are occupied, it is determined that there is no idle HARQ process. It should be understood that an occupied process is a process that is being used by the second terminal device, that is waiting for feedback, whose buffer is not empty, that is waiting for retransmission scheduling, that is waiting for retransmission resources, or that is not yet released.

S503: Send feedback information to the first terminal device, where the feedback information is used to indicate that there is an idle HARQ process or that there is no idle HARQ process.

In this step, after determining whether there is an idle HARQ process, the second terminal device needs to feed back to the first terminal device, in other words, send the feedback information. The first terminal device receives the feedback information fed back by the second terminal device. In this solution, the first feedback information is mainly used to indicate that the second terminal device has an idle HARQ process or has no idle HARQ process.

In a specific implementation, the first feedback information may further indicate a specific process identifier of an idle HARQ process of the second terminal device. This is not limited in this solution.

In another implementation of this solution, the first terminal device may further send a request to the second terminal device, to notify the second terminal device to receive sidelink data, so that after the first terminal device sends the sidelink service data, the second terminal device may select an idle HARQ process to receive the data. Optionally, the second terminal device may also feed back to indicate that the second terminal device has an idle HARQ process or has no idle HARQ process. This is not limited in this solution.

Optionally, in another specific implementation of this solution, if the first terminal device does not receive the feedback information sent by the second terminal device, the first terminal device considers that the first terminal device has no idle HARQ process. For example, if the first terminal device does not receive, at a fixed moment or on a fixed time-frequency resource, the ACK fed back by the second terminal device, the first terminal device considers that the second terminal device has no idle HARQ process, the first terminal device considers that the second terminal device cannot receive transmission. Alternatively, the first terminal device considers that the first terminal device has an idle HARQ process, and still performs SL transmission.

S504: If the feedback information indicates that the second terminal device has an idle HARQ process, send the sidelink service data to the second terminal device.

In this step, when the second terminal device determines that there is an idle process, that is, the feedback information indicates that the second terminal device has an idle HARQ process, the first terminal device may send the sidelink service data to the second terminal device based on the first information. The second terminal device receives the sidelink service data sent by the first terminal device.

UE is used as an example. A TX UE and an RX UE need to exchange respective quantities of HARQ processes or usage of HARQ processes. Specifically, for example, if the TX UE needs to send the SL service to the RX UE, the TX UE sends an indication to the RX UE. After receiving the indication, the RX UE feeds back, to the TX UE, whether the RX UE has an idle HARQ process. If the RX UE feeds back that there is an idle HARQ process (process), the TX UE performs SL transmission. Alternatively, the TX UE sends a request to the RX UE, and the RX UE learns that data needs to be received after receiving the indication, and selects an idle HARQ process to accept the data. Optionally, the RX UE feeds back, to the TX UE, whether the RX UE has an idle HARQ process.

According to the sidelink configuration method provided in this embodiment, before sidelink service data transmission, the terminal device at the transmit end and the terminal device at the receive end may further exchange the usage status of the HARQ processes. Then the terminal device at the transmit end and the terminal device at the receive end performs data transmission. This effectively prevents data transmission failure and other problems that occur because HARQ processes at the receive end are all occupied, and improves efficiency of data transmission on the sidelink.

The technical solutions provided in this application resolve how to align transmission configurations between the TX UE and the RX UE in SL transmission, so that the RX UE can correctly receive or combine data transferred by the TX UE. In addition, a HARQ process conflict in a mode 1+2 scenario is effectively resolved/avoided.

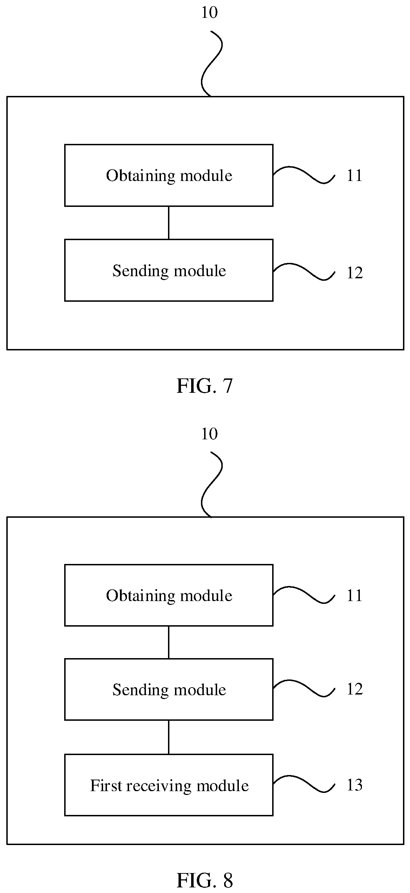

FIG. 7 is a schematic diagram of a structure of the embodiment of a sidelink configuration apparatus according to this application. As shown in FIG. 7, the sidelink configuration apparatus 10 includes:
an obtaining module 11, configured to obtain first information, where the first information is configuration information of a sidelink configured grant SL CG or activation/deactivation information of an SL CG; and
a sending module 12, configured to send the first information to a second terminal device by using sidelink radio resource control RRC, where
the sending module 12 is further configured to send sidelink service data to the second terminal device based on the first information.

Optionally, the first information includes at least one of the following: second indication information for determining a hybrid automatic repeat request HARQ process identifier, and a demodulation reference signal DMRS configuration.

The sidelink configuration apparatus provided in this embodiment is configured to perform the technical solutions provided in the foregoing method embodiments. Implementation principles and technical effects of the sidelink configuration apparatus are similar to the foregoing method embodiments. A transmit end sends SCI to a terminal device at a receive end. In this solution, transmission on information needed for sidelink transmissions is performed by using sidelink RRC, so that the terminal device at the receive end obtains a time-frequency resource configuration of sidelink transmissions, and further obtains a HARQ process identifier of each transmission. In this way, SCI sending does not need to be performed for a plurality of times subsequently. This effectively saves transmission resources on sidelink.

FIG. 8 is a schematic diagram of a structure of the embodiment of a sidelink configuration apparatus according to this application. As shown in FIG. 8, based on the foregoing embodiment, the sidelink configuration 10 further includes a first receiving module 13.

The sending module 12 is further configured to send first indication information to the second terminal device, where the first indication information is used to indicate that the sidelink configuration apparatus has service data to be sent.

The first receiving module 13 is configured to receive first feedback information fed back by the second terminal device, where the first feedback information is used to indicate that the second terminal device has an idle HARQ process or has no idle HARQ process.

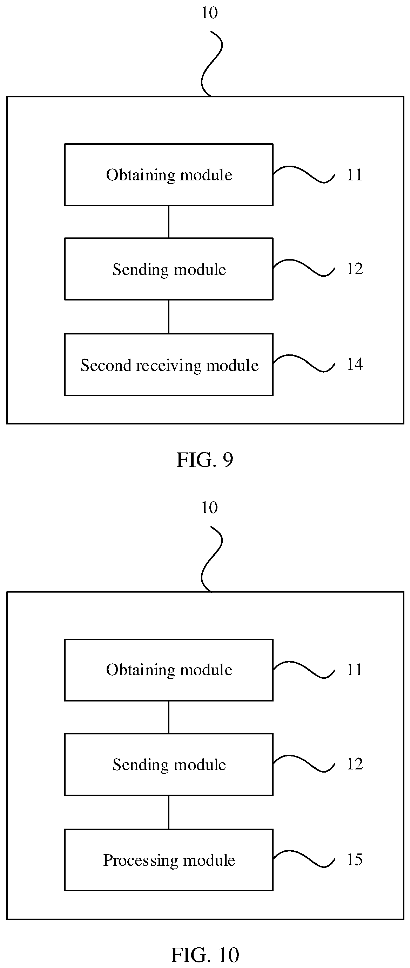

FIG. 9 is a schematic diagram of a structure of a speficic implementation of a sidelink configuration apparatus according to this application. As shown in FIG. 9, based on the foregoing embodiment, the sidelink configuration 10 further includes:
a second receiving module 14, configured to receive a transmission configuration that is of an SL CG and that is sent by a network device, where the transmission configuration of the SL CG es a time-frequency resource configuration of the SL CG.

Optionally, the sending module 12 is further configured to send second indication information to the second terminal device by using the sidelink RRC, where the second indication information determines a HARQ process identifier.

FIG. 10 is a schematic diagram of a structure of a specific implementation of a sidelink configuration apparatus according to this application. As shown in FIG. 10, based on the foregoing embodiment, the transmission configuration of the SL CG further includes a first parameter for calculating a HARQ process identifier. The sidelink configuration 10 further includes:
a processing module 15, configured to obtain the HARQ process identifier through calculation based on the first parameter and the time-frequency resource configuration of the SL CG, where the second indication information includes the HARQ process identifier.

Optionally, the transmission configuration of the SL CG further includes a first parameter for calculating the HARQ process identifier, and the second indication information includes the first parameter and the time-frequency resource configuration of the SL CG.

Based on any one of the foregoing embodiments, optionally, the processing module 15 is configured to determine the first parameter of the HARQ process identifier for transmitting sidelink data. The second indication information includes the first parameter and the time-frequency resource configuration of the SL CG.

Based on any one of the foregoing embodiments, optionally, the processing module 15 is configured to determine the DMRS configuration for transmitting sidelink data.

The sidelink configuration apparatus provided in any one of the foregoing embodiments is configured to perform the technical solution of the terminal device at the transmit end in the foregoing method embodiments. Implementation principles and technical effects of the sidelink configuration apparatus are similar to the foregoing method embodiments, and details are not described herein again.

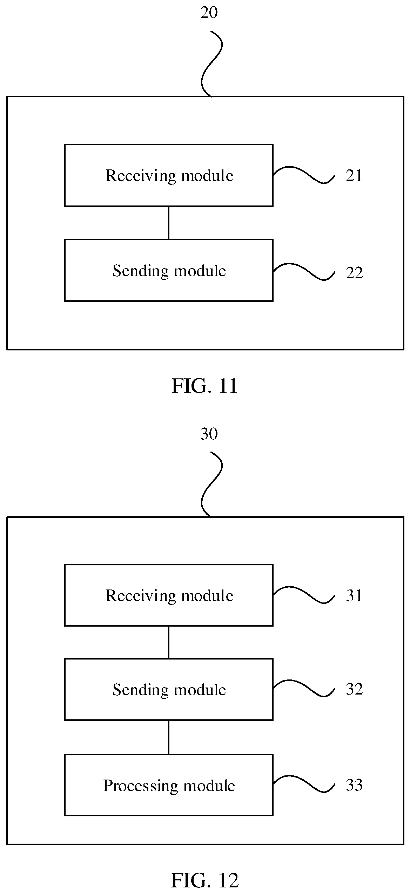

FIG. 11 is a schematic diagram of a structure of the embodiment of a sidelink configuration apparatus according to this application. As shown in FIG. 11, a sidelink configuration apparatus 20 provided in this embodiment includes:
a receiving module 21, configured to receive, by using sidelink radio resource control RRC, first information sent by a first terminal device, where the first information is configuration information of a sidelink configured grant SL CG or activation/deactivation information of an SL CG, where
the receiving module 21 is further configured to receive, based on the first information, sidelink service data sent by the first terminal device.

Optionally, the first information includes at least one of the following: second indication information for determining a hybrid automatic repeat request HARQ process identifier, and a demodulation reference signal DMRS configuration.

Optionally, the apparatus further includes a sending module 22.

The receiving module 21 is further configured to receive first indication information sent by the first terminal device, where the first indication information is used to indicate that the first terminal device has service data to be sent.

The sending module 22 is configured to send first feedback information to the first terminal device, where the first feedback information is used to indicate that the second terminal device has an idle HARQ process or has no idle HARQ process.

Optionally, the receiving module 21 is further configured to receive, by using the sidelink RRC, second indication information sent by the first terminal device, where the second indication information is for determining a HARQ process identifier.

The sidelink configuration apparatus provided in any one of the foregoing embodiments is configured to perform the technical solution of the terminal device at the receive end in the foregoing method embodiments. Implementation principles and technical effects of the sidelink configuration apparatus are similar to the foregoing method embodiments, and details are not described herein again.

FIG. 12 is a schematic diagram of a structure specific implementation of a sidelink configuration apparatus according to this application. As shown in FIG. 12, a sidelink configuration apparatus 30 provided in this embodiment includes:
a sending module 32, configured to send indication information to a second terminal device, where the indication information is for determining a HARQ process identifier.

The sending module 32 is further configured to send sidelink service data to the second terminal device based on the HARQ process identifier.

Optionally, in a specific implementation of this solution, the indication information may be sent by using sidelink RRC, or may be sent by using a PSCCH (namely, SCI) or a PSSCH (namely, SL data).

Optionally, the apparatus further includes:
a receiving module 31, configured to receive a transmission configuration that is of a sidelink configured grant SL CG and that is sent by a network device, where the transmission configuration of the SL CG includes a time-frequency resource configuration of the SL CG.

Correspondingly, the sending module 32 is specifically configured to send the sidelink service data to the second terminal device based on the time-frequency resource configuration of the SL CG and the HARQ process identifier.

Optionally, the apparatus further includes:
a processing module 33, configured to: when the sidelink configuration apparatus switches from a scheduling mode to a combination mode of the scheduling mode and an autonomous mode, the first terminal device selects, for sidelink transmission that needs to use an autonomous mode resource, the HARQ process identifier from a range of process identifiers preconfigured or configured by the network device, where the indication information includes the HARQ process identifier.

Optionally, the sending module 32 is further configured to send a first request to the network device, where the first request is used to request the network device to allocate a HARQ process identifier.

The receiving module 31 is further configured to receive a new range of process identifiers reconfigured by the network device or a process identifier configured by the network device, where the indication information includes a process identifier determined based on the range of process identifiers or the configured process identifier.

Optionally, the sending module 32 is further configured to: when the sidelink configuration apparatus switches from the autonomous mode to the combination mode of the scheduling mode and the autonomous mode, send report information to the network device, where the report information is used to report an identifier of a process occupied by the autonomous mode.

The receiving module 31 is configured to receive a process identifier configured by the network device for the scheduling mode and/or a range of process identifiers configured for the autonomous mode.

Optionally, the first terminal device is in the combination mode of the scheduling mode and the autonomous mode. The processing module 33 is further configured to use, for sidelink transmission that needs to use a scheduling mode resource, a HARQ process identifier preconfigured by the network device or configured by the network device.

The sending module 32 is further configured to send a second request to the network device for sidelink transmission that needs to use an autonomous mode resource.

The receiving module 31 is further configured to receive a HARQ process identifier configured by the network device. The second request is used to request the network device to allocate a HARQ process identifier.

Optionally, the HARQ process identifier is used for a current sidelink transmission or a subsequent sidelink transmission using the autonomous mode resource.

In another specific implementation, the sidelink configuration apparatus 30 is in the combination mode of the scheduling mode and the autonomous mode. The transmission configuration of the SL CG includes a quantity of HARQ processes and a first parameter or a range of the first parameter for determining a HARQ process identifier. The processing module 33 is further configured to determine the HARQ process identifier based on the time-frequency resource configuration of the SL CG, the quantity of HARQ processes, and the first parameter or the range of the first parameter, where the indication information includes the HARQ process identifier.

In another specific implementation, the sidelink configuration apparatus 30 is in the combination mode of the scheduling mode and the autonomous mode. The processing module 33 is further configured to:
determine a first parameter based on a current idle HARQ process; and
determine a HARQ process identifier based on the first parameter and the time-frequency resource configuration of the SL CG, where the indication information includes the HARQ process identifier.

The foregoing several solutions provide HARQ process configuration solutions in a scenario in which different modes coexist or switching between different modes is performed, to effectively avoid a HARQ process conflict when the different modes coexist or switching between the different modes is performed.

The sidelink configuration apparatus provided in any one of the foregoing embodiments is configured to perform the technical solution of the terminal device at the transmit end in the foregoing method embodiments. Implementation principles and technical effects of the sidelink configuration apparatus are similar to the foregoing method embodiments, and details are not described herein again.

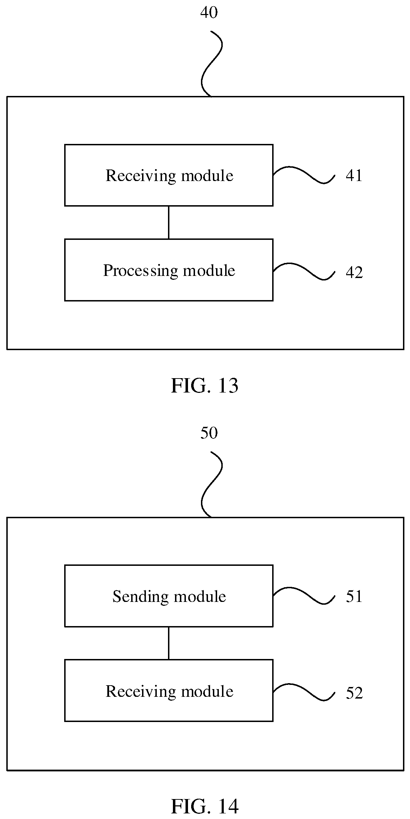

FIG. 13 is a schematic diagram of a specific implementation of a sidelink configuration apparatus according to this application. As shown in FIG. 13, a sidelink configuration apparatus 40 provided in this embodiment includes:
a receiving module 41, configured to receive indication information sent by a first terminal device, where the indication information is for determining a HARQ process identifier; and
a determining module 42, configured to determine the HARQ process identifier based on the indication information, where
the receiving module 41 is further configured to receive, based on the HARQ process identifier, sidelink service data sent by the first terminal device.

In this solution, the indication information may be transmitted by using sidelink RRC, or may be transmitted by using a PSCCH (namely, SCI) or a PSSCH (namely, SL data).

The sidelink configuration apparatus provided in the embodiments is configured to perform the technical solution of the terminal device at the receive end in the foregoing method embodiments. Implementation principles and technical effects of the sidelink configuration apparatus are similar to the foregoing method embodiments, and details are not described herein again.

FIG. 14 is a schematic diagram of a structure of the embodiment of a sidelink configuration apparatus according to this application. As shown in FIG. 14, a sidelink configuration apparatus 50 provided in this embodiment includes:
a sending module 51, configured to send indication information to a second terminal device, where the indication information is used to indicate that the first terminal device has service data to be sent; and
a receiving module 52, configured to receive feedback information fed back by the second terminal device, where the feedback information is used to indicate that the second terminal device has an idle HARQ process or has no idle HARQ process.

If the feedback information indicates that the second terminal device has an idle HARQ process, the sending module is further configured to send sidelink service data to the second terminal device.

The sidelink configuration apparatus provided in the embodiments is configured to perform the technical solution of the terminal device at the transmit end in the foregoing method embodiments. Implementation principles and technical effects of the sidelink configuration apparatus are similar to the foregoing method embodiments, and details are not described herein again.

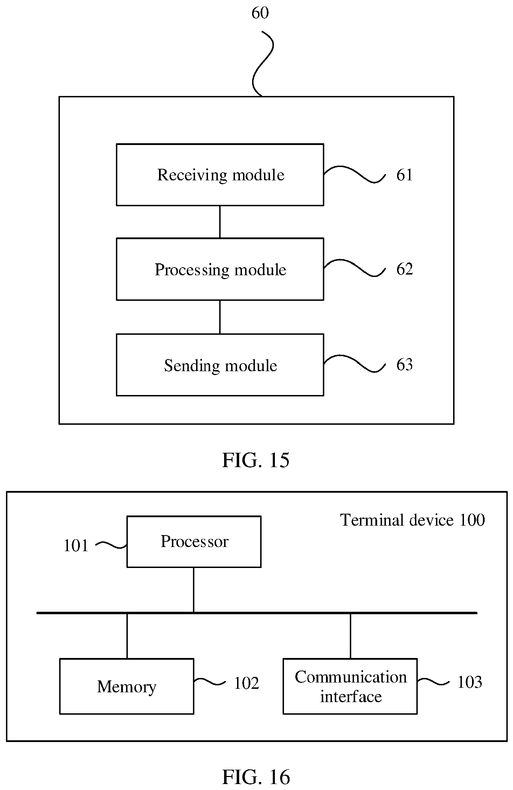

FIG. 15 is a schematic diagram of a structure of the embodiment of a sidelink configuration apparatus according to this application. As shown in FIG. 15, a sidelink configuration apparatus 60 provided in this embodiment includes:
a receiving module 61, configured to receive indication information sent by a first terminal device, where the indication information is used to indicate that the first terminal device has service data to be sent;
a processing module 62, configured to determine that there is an idle HARQ process or that there is no idle HARQ process; and
a sending module 63, configured to send feedback information to the first terminal device, where the feedback information is used to indicate that there is an idle HARQ process or that there is no idle HARQ process.

If the feedback information indicates that there is an idle HARQ process, the receiving module is further configured to receive sidelink service data sent by the first terminal device.

The sidelink configuration apparatus provided in the embodiments is configured to perform the technical solution of the terminal device at the receive end in the foregoing method embodiments. Implementation principles and technical effects of the sidelink configuration apparatus are similar to the foregoing method embodiments, and details are not described herein again.

FIG. 16 is a schematic diagram of a structure of a terminal device according to this application. As shown in FIG. 16, the terminal device 100 includes:
a processor 101, a memory 102, and a communication interface 103.

The memory 102 is configured to store a program and data, and the processor 101 invokes the program stored in the memory, to perform the technical solution of the sidelink configuration method provided in any one of the foregoing method embodiments.

In a specific implementation of the terminal device, there is at least one processor, configured to execute executable instructions, namely, the computer program, stored in the memory, so that data exchange is performed between terminal devices and between the terminal device and the network device by using the communication interface, to perform the sidelink configuration method provided in the foregoing implementations. Optionally, the memory may be further integrated into the processor.

An embodiment of this application provides a chip, which may include a memory and a processor. The memory stores code and data, the memory is coupled to the processor, and the processor runs the code in the memory, so that the chip performs the technical solution in any one of the foregoing method embodiments. The chip is configured to support the terminal device to implement the sidelink configuration method in the embodiments of this application, for example, sending or processing data and/or information in the foregoing method. The chip is specifically used in a chip system. The chip system may include a chip, or may include a chip and another discrete component. When a chip in a device implements the foregoing asynchronous uplink transmission method, the chip includes a processing unit and a communication unit. The processing unit may be, for example, a processor, and the communication unit may be, for example, an input/output interface, a pin, or a circuit. The processing unit performs all or some actions performed by the processing module of the terminal device in the embodiments of this application, and the communication unit may perform corresponding actions performed by the receiving module and the sending module of the terminal device in the embodiments of this application. For example, when the receiving module of the terminal device receives a radio frequency signal, the communication unit receives a baseband signal corresponding to the radio frequency signal. When the sending module of the terminal device sends a radio frequency signal, the communication unit sends a baseband signal corresponding to the radio frequency signal. In another specific embodiment, the terminal device in this application may be a chip, in other words, a processing module of the terminal device is a processing unit of the chip, and a receiving module and a sending module of the terminal device are a communication unit of the chip.

This application further provides a computer-readable storage medium. The computer-readable storage medium includes a program. When executed by a processor, the program is used to perform the technical solution in any one of the foregoing method embodiments.

This application further provides a computer program product. When the computer program product runs on a computer, the computer performs the technical solution in any one of the foregoing method embodiments.

In a specific implementation of the foregoing terminal device and network device, it should be understood that the processor may be a central processing unit (English: Central Processing Unit, CPU for short), or may be another general purpose processor, a digital signal processor (English: Digital Signal Processor, DSP for short), an application-specific integrated circuit (English: Application Specific Integrated Circuit, ASIC for short), or the like. The general-purpose processor may be a microprocessor, or the processor may be any conventional processor or the like. Steps of the methods disclosed with reference to this application may be directly performed and accomplished by a hardware processor, or may be performed and accomplished by a combination of hardware and a software module in a processor.

All or some of the steps in the method embodiments may be implemented by hardware related to program instructions. The foregoing program may be stored in a readable memory. When the program is executed, the steps in the foregoing method embodiments are performed. The foregoing memory (storage medium) includes a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

## Claims

1. A sidelink configuration method, applied to a first terminal device, wherein the method comprises:
obtaining (S101) first information, wherein the first information is configuration information of a sidelink configured grant or activation/deactivation information of a sidelink configured grant;
sending (S102) the first information to a second terminal device by using sidelink radio resource control, RRC; and
sending (S103) sidelink service data to the second terminal device based on the first information;
**characterized in that** the method further comprises:
sending (S201, S501) first indication information to the second terminal device, wherein the first indication information is used to indicate that the first terminal device has service data to be sent; and
receiving (S202, S503) first feedback information fed back by the second terminal device, wherein the first feedback information is used to indicate that the second terminal device has an idle HARQ process or has no idle HARQ process.

2. The method according to claim 1, wherein the first information comprises at least one of the following: second indication information for determining a hybrid automatic repeat request, HARQ, process identifier, and a demodulation reference signal, DMRS, configuration.

3. The method according to any one of claims 1 to 2, wherein before the obtaining (S101) first information, the method further comprises:
receiving a transmission configuration that is of the sidelink configured grant, SL CG, and that is sent by a network device, wherein the transmission configuration of the SL CG comprises a time-frequency resource configuration of the SL CG.

4. The method according to claim 1, wherein the method further comprises:
sending second indication information to the second terminal device by using the sidelink RRC, wherein the second indication information determines a HARQ process identifier.

5. A sidelink configuration method, applied to a second terminal device, wherein the method comprises:
receiving (S102), by using sidelink radio resource control, RRC, first information sent by a first terminal device, wherein the first information is configuration information of a sidelink configured grant, SL CG or activation/deactivation information of an SL CG; and
receiving (S103), based on the first information, sidelink service data sent by the first terminal device;
**characterized in that** the method further comprises:
receiving (S201, S501) first indication information sent by the first terminal device, wherein the first indication information is used to indicate that the first terminal device has service data to be sent; and
sending (S202, S503) first feedback information to the first terminal device, wherein the first feedback information is used to indicate that the second terminal device has an idle HARQ process or has no idle HARQ process.

6. The method according to claim 5, wherein the first information comprises at least one of the following: second indication information for determining a hybrid automatic repeat request, HARQ, process identifier, and a demodulation reference signal, DMRS, configuration.

7. The method according to claim 5, wherein the method further comprises:
receiving, by using the sidelink RRC, second indication information sent by the first terminal device, wherein the second indication information is for determining a HARQ process identifier.

8. An apparatus (10) associated with a first terminal device, wherein the apparatus is configured to perform the method according to any one of claims 1 to 4.

9. A computer readable storage medium comprising an instruction, which, when executed by a computer device associated with a first terminal device, causes the first terminal deviceto perform the method according to any one of claims 1 to 4.

10. A computer program product, comprising an instruction, which, when executed by a computer device associated with a first terminal device, causes the first terminal device to perform the method according to any one of claims 1 to 4.

11. An apparatus (20) associated with a second terminal device, wherein the apparatus is configured to perform the method according to any one of claims 5 to 7.

12. A computer readable storage medium comprising an instruction, which, when executed by a computer device associated with a second terminal device, causes the second terminal device to perform the method according to any one of claims 5 to 7.

13. A computer program product, comprising an instruction, which, when executed by a computer device associated with a second terminal device, causes the second terminal device to perform the method according to any one of claims 5 to 7.

## Patentansprüche

1. Sidelink-Konfigurationsverfahren, das auf ein erstes Endgerät angewendet wird, wobei das Verfahren Folgendes umfasst:
Erlangen (S101) erster Informationen, wobei die ersten Informationen Konfigurationsinformationen einer über Sidelink konfigurierten Bewilligung oder Aktivierungs- /Deaktivierungsinformationen einer über Sidelink konfigurierten Bewilligung sind;
Senden (S102) der ersten Informationen an ein zweites Endgerät unter Verwendung einer Sidelink-Funkressourcensteuerung, Sidelink-RRC; und
Senden (S103) von Sidelink-Dienstdaten an das zweite Endgerät basierend auf den ersten Informationen;
**dadurch gekennzeichnet, dass** das Verfahren ferner Folgendes umfasst:
Senden (S201, S501) erster Anzeigeinformationen an das zweite Endgerät, wobei die ersten Anzeigeinformationen verwendet werden, um anzuzeigen, dass das erste Endgerät zu sendende Dienstdaten aufweist; und
Empfangen (S202, S503) erster Rückmeldeinformationen, die durch das zweite Endgerät zurückgemeldet werden, wobei die ersten Rückmeldeinformationen verwendet werden, um anzuzeigen, dass das zweite Endgerät einen inaktiven HARQ-Prozess aufweist oder keinen inaktiven HARQ-Prozess aufweist.

2. Verfahren nach Anspruch 1, wobei die ersten Informationen mindestens eines der Folgenden umfassen: zweite Anzeigeinformationen zum Bestimmen einer hybriden automatischen Wiederholungsanforderungsprozesskennung, HARQ-Prozesskennung, und einer Demodulationsreferenzsignalkonfiguration, DMRS-Konfiguration.

3. Verfahren nach einem der Ansprüche 1 bis 2, wobei das Verfahren vor dem Erlangen (S101) erster Informationen ferner Folgendes umfasst:
Empfangen einer Übertragungskonfiguration, die zu der über Sidelink konfigurierten Bewilligung, SL CG, gehört und durch ein Netzwerkgerät gesendet wird, wobei die Übertragungskonfiguration des SL CG eine Zeit-Frequenz-Ressourcenkonfiguration des SL CG umfasst.

4. Verfahren nach Anspruch 1, wobei das Verfahren ferner Folgendes umfasst:
Senden zweiter Anzeigeinformationen an das zweite Endgerät unter Verwendung der Sidelink-RRC, wobei die zweiten Anzeigeinformationen eine HARQ-Prozesskennung bestimmen.

5. Sidelink-Konfigurationsverfahren, das auf ein zweites Endgerät angewendet wird, wobei das Verfahren Folgendes umfasst:
Empfangen (S102), unter Verwendung einer Sidelink-Funkressourcensteuerung, Sidelink-RRC, erster Informationen, die durch ein erstes Endgerät gesendet werden, wobei die ersten Informationen Konfigurationsinformationen einer über Sidelink konfigurierten Bewilligung, SL CG, oder Aktivierungs- /Deaktivierungsinformationen einer SL CG sind; und
Empfangen (S103), basierend auf den ersten Informationen, von Sidelink-Dienstdaten, die durch das erste Endgerät gesendet werden;
**dadurch gekennzeichnet, dass** das Verfahren ferner Folgendes umfasst:
Empfangen (S201, S501) erster Anzeigeinformationen, die durch das erste Endgerät gesendet werden, wobei die ersten Anzeigeinformationen verwendet werden, um anzuzeigen, dass das erste Endgerät zu sendende Dienstdaten aufweist; und
Senden (S202, S503) erster Rückmeldeinformationen an das erste Endgerät, wobei die ersten Rückmeldeinformationen verwendet werden, um anzuzeigen, dass das zweite Endgerät einen inaktiven HARQ-Prozess aufweist oder keinen inaktiven HARQ-Prozess aufweist.

6. Verfahren nach Anspruch 5, wobei die ersten Informationen mindestens eines der Folgenden umfassen: zweite Anzeigeinformationen zum Bestimmen einer hybriden automatischen Wiederholungsanforderungsprozesskennung, HARQ-Prozesskennung, und einer Demodulationsreferenzsignalkonfiguration, DMRS-Konfiguration.

7. Verfahren nach Anspruch 5, wobei das Verfahren ferner Folgendes umfasst:
Empfangen, unter Verwendung der Sidelink-RRC, zweiter Anzeigeinformationen, die durch das erste Endgerät gesendet werden, wobei die zweiten Anzeigeinformationen zum Bestimmen einer HARQ-Prozesskennung dienen.

8. Vorrichtung (10), die einem ersten Endgerät zugeordnet ist, wobei die Vorrichtung dazu konfiguriert ist, das Verfahren nach einem der Ansprüche 1 bis 4 durchzuführen.

9. Computerlesbares Speichermedium, umfassend eine Anweisung, die, wenn sie durch ein Computergerät ausgeführt wird, das einem ersten Endgerät zugeordnet ist, das erste Endgerät veranlasst, das Verfahren nach einem der Ansprüche 1 bis 4 durchzuführen.

10. Computerprogrammprodukt, umfassend eine Anweisung, die, wenn sie durch ein Computergerät ausgeführt wird, das einem ersten Endgerät zugeordnet ist, das erste Endgerät veranlasst, das Verfahren nach einem der Ansprüche 1 bis 4 durchzuführen.

11. Vorrichtung (20), die einem zweiten Endgerät zugeordnet ist, wobei die Vorrichtung dazu konfiguriert ist, das Verfahren nach einem der Ansprüche 5 bis 7 durchzuführen.

12. Computerlesbares Speichermedium, umfassend eine Anweisung, die, wenn sie durch ein Computergerät ausgeführt wird, das einem zweiten Endgerät zugeordnet ist, das zweite Endgerät veranlasst, das Verfahren nach einem der Ansprüche 5 bis 7 durchzuführen.

13. Computerprogrammprodukt, umfassend eine Anweisung, die, wenn sie durch ein Computergerät ausgeführt wird, das einem zweiten Endgerät zugeordnet ist, das zweite Endgerät veranlasst, das Verfahren nach einem der Ansprüche 5 bis 7 durchzuführen.

## Revendications

1. Procédé de configuration de liaison latérale, appliqué à un premier dispositif terminal, dans lequel le procédé comprend :
l'obtention (S101) de premières informations, dans lequel les premières informations sont des informations de configuration d'un octroi configuré de liaison latérale ou des informations d'activation/de désactivation d'un octroi configuré de liaison latérale ;
l'envoi (S102) des premières informations à un second dispositif terminal en utilisant une commande de ressources radio, RRC, de liaison latérale ; et
l'envoi (S103) de données de service de liaison latérale au second dispositif terminal sur la base des premières informations ;
**caractérisé en ce que** le procédé comprend également :
l'envoi (S201, S501) de premières informations d'indication au second dispositif terminal, dans lequel les premières informations d'indication sont utilisées pour indiquer que le premier dispositif terminal présente des données de service à envoyer ; et
la réception (S202, S503) de premières informations de rétroaction renvoyées par le second dispositif terminal, dans lequel les premières informations de rétroaction sont utilisées pour indiquer que le second dispositif terminal présente un processus HARQ inactif ou ne présente aucun processus HARQ inactif.

2. Procédé selon la revendication 1, dans lequel les premières informations comprennent au moins l'un des éléments suivants : des secondes informations d'indication permettant de déterminer une requête de répétition automatique hybride, HARQ, un identifiant de processus et une configuration de signal de référence de démodulation, DMRS.

3. Procédé selon l'une quelconque des revendications 1 et 2, dans lequel avant l'obtention (S101) de premières informations, le procédé comprend également :
la réception d'une configuration de transmission de l'octroi configuré de liaison latérale, SL CG, et qui est envoyée par un dispositif réseau, dans lequel la configuration de transmission du SL CG comprend une configuration de ressource temps-fréquence du SL CG.

4. Procédé selon la revendication 1, dans lequel le procédé comprend également :
l'envoi de secondes informations d'indication au second dispositif terminal en utilisant une RRC de liaison latérale, dans lequel les secondes informations d'indication déterminent un identifiant de processus HARQ.

5. Procédé de configuration de liaison latérale, appliqué à un second dispositif terminal, dans lequel le procédé comprend :
la réception (S102), en utilisant une commande de ressources radio, RRC, de liaison latérale, de premières informations de envoyées par un premier dispositif terminal, dans lequel les premières informations sont des informations de configuration d'un octroi configuré de liaison latérale, SL CG ou des informations d'activation/de désactivation d'un SL CG ; et
la réception (S103), sur la base des premières informations, de données de service de liaison latérale envoyées par le premier dispositif terminal ;
**caractérisé en ce que** le procédé comprend également :
la réception (S201, S501) de premières informations d'indication envoyées par le premier dispositif terminal, dans lequel les premières informations d'indication sont utilisées pour indiquer que le premier dispositif terminal présente des données de service à envoyer ; et
l'envoi (S202, S503) de premières informations de rétroaction au premier dispositif terminal, dans lequel les premières informations de rétroaction sont utilisées pour indiquer que le second dispositif terminal présente un processus HARQ inactif ou ne présente aucun processus HARQ inactif.

6. Procédé selon la revendication 5, dans lequel les premières informations comprennent au moins l'un des éléments suivants :
des secondes informations d'indication permettant de déterminer une requête de répétition automatique hybride, HARQ, un identifiant de processus et une configuration de signal de référence de démodulation, DMRS.

7. Procédé selon la revendication 5, dans lequel le procédé comprend également :
la réception, en utilisant une RRC de liaison latérale, de secondes informations d'indication envoyées par le premier dispositif terminal, dans lequel les secondes informations d'indication sont destinées à déterminer un identifiant de processus HARQ.

8. Appareil (10) associé à un premier dispositif terminal, dans lequel l'appareil est configuré pour réaliser le procédé selon l'une quelconque des revendications 1 à 4.

9. Support de stockage lisible par ordinateur comprenant une instruction qui, lorsqu'elle est exécutée par un dispositif informatique associé à un premier dispositif terminal, amène le premier dispositif terminal à réaliser le procédé selon l'une quelconque des revendications 1 à 4.

10. Produit de programme informatique comprenant une instruction qui, lorsqu'elle est exécutée par un dispositif informatique associé à un premier dispositif terminal, amène le premier dispositif terminal à réaliser le procédé selon l'une quelconque des revendications 1 à **4.**

11. Appareil (20) associé à un second dispositif terminal, dans lequel l'appareil est configuré pour réaliser le procédé selon l'une quelconque des revendications 5 à **7.**

12. Support de stockage lisible par ordinateur comprenant une instruction qui, lorsqu'elle est exécutée par un dispositif informatique associé à un second dispositif terminal, amène le second dispositif terminal à réaliser le procédé selon l'une quelconque des revendications 5 à **7.**

13. Produit de programme informatique comprenant une instruction qui, lorsqu'elle est exécutée par un dispositif informatique associé à un second dispositif terminal, amène le second dispositif terminal à réaliser le procédé selon l'une quelconque des revendications 5 à **7.**
